# EUROPEAN PATENT APPLICATION

(11) **EP 4 725 683 A1**
(43) Date of publication of application: **15.04.2026**
(21) Application number: 25220599.2
(22) Date of filing: 20.03.2024
(51) Int. Cl.: B29C 70/48, B29C 33/02, B29C 70/54, B29C 33/50, B29C 70/44

(54) **METHOD AND APPARATUS FOR MANUFACTURING A COMPOSITE PRODUCT**

(30) Priority: 23.03.2023 GB 202304257
(62) Divisional of application: 24164967.2
(71) Applicant: SHORT BROTHERS PLC, Belfast BT3 9DZ (GB); Spirit AeroSystems Global Holdings Limited, London E1W 1AA (GB)
(72) Inventor: WILSON, Robert Samuel, Belfast, BT3 9DZ (GB); BRANIFF, Mark, Belfast, BT3 9DZ (GB); MOORE, Alan, Ayrshire, KA9 2RW (GB); KAKARATSIOS, Zacharias, Ayrshire, KA9 2RW (GB)
(74) Representative: HGF

(57) **Abstract**

A resin transfer injection apparatus (1) and method for manufacturing a composite product is provided comprising first and second tools (7, 9), fashioned to at least partially correspond with first and second outer edges of the product, a preform assembly (11), comprising a product preform (12) fashioned to define a shape of the product, fitted between the first and second tools, at least one heater which allows the first and second tools (7, 9) and the preform assembly (11) to reach at least a predefined temperature, at least one spacing device to form a first cavity (19) between the preform assembly (11) and the first tool (7) and a second cavity (21) between the preform assembly (11) and the second tool (9), a tool movement mechanism for closing and opening the first and second tools (7, 9), at least one vacuum pump which establishes a partial vacuum between the first and second tools (7, 9), and a resin injection system which injects a volume of pressurised preheated resin simultaneously into the first and second cavities (19, 21), wherein injection pressure of the resin and the partial vacuum moves the resin throughout the first and second cavities (19, 21) and starts infusion of the resin into the product preform (12) of the preform assembly (11) simultaneously from the first and second cavities, the first and second tools (7, 9) are closed to reduce the first and second cavities (19, 21) and apply pressure to accelerate infusion of the resin into the product preform (12) of the preform assembly (11) simultaneously from the first and second cavities (19, 21) and the resin is allowed to cure to form the product.

## Description

### Technical Field

The present disclosure relates to a method and apparatus for manufacturing a composite product, particularly, but not exclusively, manufacturing composite products for the aerospace industry.

### Background of the Invention

Urban Air Mobility (UAM), being developed in response to traffic congestion, is the use of small, highly automated aircraft to carry passengers or cargo at lower altitudes in urban and suburban areas UAM usually refers to existing and emerging technologies, such as traditional helicopters, Vertical Take-Off & Landing (VTOL) aircraft, electrically-propelled eVTOL aircraft and unmanned aerial vehicles (UAVs). These aircraft are characterized by the use of multiple electric-powered rotors or fans for lift and propulsion, along with fly-by-wire systems to control them.

UAM concepts have been explored since the early days of powered flight. However, beginning in the late 2010s, advances in materials, computerised flight controls, batteries and electric motors have improved innovation and designs. The aerospace industry is in active search for light weight, high production rate solutions for the manufacture of components of aircraft for the eVTOL / UAM market. eVTOL companies are seeking composite aircraft component, e.g. wing, manufacturing technology that can achieve ever-increasing build rates, for example, 8000/year build rate, which is extremely high in aerospace terms.

It is an object of at least one aspect of the present invention to provide improved manufacturing of components for such aircraft.

### Summary of the Invention

According to a first aspect there is provided a resin transfer injection method for manufacturing a composite product comprising:
fitting a preform assembly, comprising a product preform fashioned to define a shape of the product, between first and second tools;
allowing the first and second tools and the preform assembly to reach at least a predefined temperature;
using at least one spacing device to form a first cavity between the preform assembly and the first tool and a second cavity between the preform assembly and the second tool; establishing a partial vacuum between the first and second tools;
injecting a volume of pressurised preheated resin simultaneously into the first and second cavities;
using injection pressure of the resin and the partial vacuum to move the resin throughout the first and second cavities and start infusion of the resin into the product preform of the preform assembly simultaneously from the first and second cavities;
closing the first and second tools to reduce the first and second cavities and apply pressure to accelerate infusion of the resin into the product preform of the preform assembly simultaneously from the first and second cavities;
allowing the resin infused into the product preform to cure to form the composite product.

Allowing the first and second tools to reach at least a predefined temperature may comprise applying heat to the tools. Allowing the preform assembly to reach at least a predefined temperature may comprise fitting a preform assembly preheated to the predefined temperature into a heated cavity between the first and second tools. Allowing the preform assembly to reach at least a predefined temperature may comprise fitting a room temperature preform assembly into a heated cavity between the first and second tools and allowing the preform assembly to be heated to at least the predefined temperature. **The** predefined temperature may be an injection temperature of the resin, for example in a range of 120°C to 180°C. In a preferred embodiment, the predefined temperature is a resin cure temperature, for example a 180°C resin cure temperature.

Establishing a partial vacuum between the first and second tools may comprise establishing a residual pressure of less than 100 mbar.

The first cavity and the second cavity may be sized to accommodate the volume of resin and achieve a predefined volume fibre (Vf) of the product. The predefined Vf of the product may be in the range of 53% to 63% for aerospace products and may be 45% for automotive products.

Using the at least one spacing device to form a first cavity between the preform assembly and the first tool and a second cavity between the preform assembly and the second tool may comprise inserting at least one first resilient element between a first outer edge of the preform assembly and the first tool to form the first cavity therebetween and inserting at least one second resilient element between a second outer edge of the preform assembly and the second tool to form the second cavity therebetween.

The first and second tools may be fashioned to at least partially correspond with first and second outer edges of the product. The method may further comprise checking fit of the first and second tools around the product by closing the first and second tools and reducing the first and second cavities and separating the first and second tools by a distance to recreate the first and second cavities.

Checking the fit of the first and second tools around the product by closing the first and second tools may compress the first and second resilient elements and reduce the first and second cavities. Separating the first and second tools by a distance may decompress the first and second resilient elements and recreate the first and second cavities.

After injection of the volume of pressurised preheated resin, injection valves are closed and the resin is trapped between the first and second tools.

The method may further comprise securing the first and second tools to a press. The method may further comprise using the press to close the first and second tools.

After closing the first and second tools pressure applied to the tools by the press can be reduced or turned off. The press may be locked in place. Pressure may be introduced via a resin inlet. This may be done to accommodate tolerances and mis matches between the preform assembly and the first and second tools.

The method may further comprise opening the first and second tools to remove the product. After opening the first and second tools to remove the product, the preform assembly may also be removed.

According to a second aspect there is provided a resin transfer injection apparatus for manufacturing a composite product comprising:
first and second tools, fashioned to at least partially correspond with first and second outer edges of the product;
a preform assembly, comprising a product preform fashioned to define a shape of the product, fitted between the first and second tools;
at least one heater which allows the first and second tools and the preform assembly to reach at least a predefined temperature;
at least one spacing device which forms a first cavity between the preform assembly and the first tool and a second cavity between the preform assembly and the second tool;
a tool movement mechanism for closing and opening the first and second tools;
at least one vacuum pump which establishes a partial vacuum between the first and second tools; and
a resin injection system which injects a volume of pressurised preheated resin simultaneously into the first and second cavities,
wherein injection pressure of the resin and the partial vacuum moves the resin throughout the first and second cavities and starts infusion of the resin into the product preform of the preform assembly simultaneously from the first and second cavities, the first and second tools are closed to reduce the first and second cavities and apply pressure to accelerate infusion of the resin into the product preform of the preform assembly simultaneously from the first and second cavities and the resin is allowed to cure to form the product.

The apparatus may comprise a press. The first and second tools may be secured to the press. The press may provide the tool movement mechanism for closing and opening the first and second tools. The press may comprise a hydraulic, e.g. water, press. The press may comprise first and second platens to which the first and second tools are respectively secured.

The first and second tools may comprise coffin-type mould tools. The first and second tools may comprise metal tools. The first and second tools may be outer mould line (OML) tools, fashioned to at least partially correspond with the first and second outer edges of the product.

The first tool may fit into the second tool. Alternatively the first tool may fit over the second tool. The apparatus may comprise at least one seal between the first and second tools.

The preform assembly may comprise one or more inner mandrels. The inner mandrels may be solid or hollow. The inner mandrels may be single piece. This will assist handling, preform assembly loading and extraction. The preform assembly may comprise one or more outer mandrels. The outer mandrels may be multi part. This will assist with removal thereof and access to the product and inner mandrels.

The preform assembly may comprise one or more key blocks. The preform assembly may comprise a first key block at a first periphery of the assembly and a second key block at a second, opposite, periphery of the assembly. The first and second key blocks may position the preform assembly centrally within the first and second tools. The first and second key blocks may be wedge-shaped. This shape allows the product preform to relax IWO spar flanges which facilitates in-plane injection of resin. The first and second key blocks may facilitate fitting of the preform assembly between the first and second tools. The first and second key blocks may facilitate removal of the preform assembly from the first and second tools, for example by allowing access to the assembly. The first and second key blocks may avoid entrapment of the preform assembly by any shrinking of the first and second tools. The first and second key blocks may facilitate removal of the product from the first and second tools, for example by allowing access to the product.

Alternatively, the first tool or the second tool or the first and second tools may comprise one or more key blocks. A first key block may be provided at a first edge of the tools and a second key block may be provided at a second, opposite, edge of the tools. The first and second key blocks may position the preform assembly centrally within the first and second tools. The first and second key blocks may be wedge-shaped. On separation of the first and second tools, the first and second key blocks may be automatically removed from the preform assembly.

The at least one spacing device may comprise at least one gripper.

The at least one spacing device may comprise at least one first resilient element between a first outer edge of the preform assembly and the first tool to form the first cavity therebetween and at least one second resilient element between a second outer edge of the preform assembly and the second tool to form the second cavity therebetween.

The tool movement mechanism on closing the first and second tools may compress the first and second resilient elements to reduce the first and second cavities. The tool movement mechanism on separating the first and second tools by a distance may decompress the first and second resilient elements to recreate the first and second cavities.

The resin injection system may comprise a first injection inlet which injects pressurised preheated resin into the first cavity and a second injection inlet which injects pressurised preheated resin into the second cavity.

The at least one first resilient element and the at least one second resilient element may separate the first and second tools up to a predefined load, after which they deform to allow the first and second tools to move together and apply pressure to the preform assembly and resin.

The at least one first resilient element and the at least one second resilient element may comprise any of a ring-shaped resilient element, a prism-shaped resilient element, a folded leaf spring, a top hat-shaped spring, a sine wave-shaped spring, a hook-shaped spring, an open cell foam, a moving cam.

The ring-shaped resilient element may have a cross section in the shape of any of an O, an X, a square, a U-cup. The ring-shaped resilient element may be any of solid, hollow. The ring-shaped resilient element may comprise a resilient material such as rubber.

The prism-shaped resilient element may comprise a grooved triangular prism-shaped element which compresses under load. The prism-shaped resilient element may be any of solid, hollow. The prism-shaped resilient element may comprise a resilient material such as a polymeric material or rubber.

The folded leaf spring may comprise a folded metallic strip. The folded metallic strip may comprise any of one fold, a plurality of folds. The latter may provide more consistent resilience over a longer range. The folded metallic strip may allow for un-impeded resin movement in to the first and second cavities.

The top hat-shaped spring may comprise one or more resin access holes. The sine wave-shaped spring may comprise one or more resin access holes.

The hook-shaped spring may comprise a plastic material.

The open cell foam may comprise any of a plastic material, a metallic material.

The moving cam may have a mechanism for turning and locking in an operative position. The mechanism may comprise a shaft rotated outside the first and second tools. The moving cam may comprise a seal around the shaft. This is required to maintain integrity of the partial vacuum within the first and second tools. The moving cam may comprise any of a metallic material, a polymer material. The moving cam may be detachable after each resin infusion.

The apparatus may comprise one or more vacuum seals positioned between the first tool and the second tool.

The opening and closing of the first and second tools, during the manufacturing method, necessitates the development of a reliable, repeatable and durable "dynamic" mould sealing design.

The vacuum seals may comprise any of a compliant O ring, a sliding O ring, an inflatable seal.

The sliding O ring may comprise a double sliding O ring vacuum seal. this may comprise an elastomeric material. Such seals are readily available, easy to make into a continuous loop and easily replaced. The double sliding O ring vacuum seal may comprise two O rings and have a vacuum line between them. The double sliding O ring vacuum seal may be used in conjunction with a resin stop e.g. of compressed cork. The double sliding O ring vacuum seal may be used in conjunction with a peripheral looped bag seal. This may comprise a moulded polymeric material or a nylon bagging material with edge sealant. Such a quadruple seal assembly is recommended to guarantee vacuum integrity and seal longevity, while allowing movement of the first and second tools without loss of vacuum integrity.

The inflatable seal may be hollow. The inflatable seal may comprise a reinforced elastomer material, e.g. a reinforced silicone rubber. The inflatable seal may be used in conjunction with a resin stop e.g. of compressed cork or an elastomeric prism. A vacuum line may be positioned between the resin stop and the inflatable seal. The inflatable seal may be used in conjunction with a peripheral looped bag. This may comprise a moulded polymeric material or a nylon bagging material with edge sealant. This is recommended to act as a safeguard should the resin stop and primary vacuum inflatable seal fail.

The apparatus may comprise one or more fasteners which provide fastening for the product preform.

This may be required if, after the preform assembly, including the product preform, reaches the predefined temperature, the bond between at least some plys and/or components of the preform becomes weak and, when the first and second tools are separated to recreate the first and second cavities, at least some of the plys and/or components may become detached. This could result in obstruction of the flow of the resin in the cavities and/or ply/component distortion or overlapping, areas of high Vf, wrinkles, gapping etc., which reduces the structural integrity of the preform.

The one or more fasteners may comprise any of self-adhesive heat resistant tape, one or more grip strips, one or more shear pins, one or more lock-in tabs, one or more clamp plates, one or more bands, one or more perforated caul plates.

The self-adhesive heat resistant tape may be applied between the product preform and a mandrel of the preform assembly.

The or each grip strip may have a roughened or textured surface. The or each grip strip may be applied between the product preform and a mandrel of the preform assembly.

The or each shear pin may comprise a polymeric material. A polymeric material allows easy shearing of the one or more pins after the preform-resin laminate has cured. The or each shear pin may be a needle-type pin with a cap. The or each shear pin may be applied through the product preform into a mandrel of the preform assembly.

The or each lock-in tab may be used to lock the product preform to a net edge mould within a mandrel of the preform assembly. The or each lock-in tab may be trimmed post cure of the resin.

The or each clamp plate may be mechanically fastened between the product preform and a mandrel of the preform assembly. The or each clamp plate may nest into a groove provided in the first or second tool when the tools are closed.

The or each band may straddle the product preform and be mechanically locked into place on a mandrel of the preform assembly, e.g. using pins. The or each band may comprise a polymeric material, e.g. PTFE. The or each band may comprise a or metallic material. The or each band may be perforated over a partial length thereof or over an entire length thereof. The or each band may locate in a saddle groove provided in the first or second tool when the tools are closed.

The or each band may be combined with one or more clamp plates to form a skeleton fastener. The skeleton fastener may be applied around a periphery of product preform or on sides of the product preform.

The or each perforated caul plate may be applied over a complete surface of the product preform. The or each perforated caul plate may comprise a composite material or a metallic material.

An optimum fastener solution may comprise any of the above alone or in combination.

The apparatus may comprise one or more spacers which provide support for the product preform. The or each spacer may be positioned between the product preform and the first and/or second tool to support the product preform.

The one or more spacers may comprise any of one or more inflatable pressure tubes, one or more collapsible grooved triangular prisms, one or more collapsible meshes.

The or each collapsible grooved triangular prism may be any of solid, hollow. The or each collapsible grooved triangular prism may comprise a polymeric material, e.g. silicone. The or each collapsible grooved triangular prism may deflect into a groove provided in the first or second tool when the tools are closed.

The or each collapsible mesh may be applied to the product preform using a ply coating. The ply coating may be a perforated or porous peel ply coating which facilities release after resin cure.

The method and apparatus may be used in aerospace construction for the manufacture of composite products comprising any closed cell structure. The method and apparatus may be used in aerospace construction for the manufacture of composite products comprising any of wings, empennage, ailerons, rudders, control surfaces, flaps, vanes, spoilers, elevators, slats, doors.

The composite product may comprise a dry fibre product preform. The dry fibre product preform may be a carbon dry fibre product preform. The dry fibre product preform may be formed from a plurality of tows by any of weaving, stitching, braiding and other textile technologies. The plurality of tows may be in the form of a fabric or may be in a unidirectional form. Using dry fibre for the product preform benefits from extended shelf life and elimination of the need for refrigeration.

The product preform may comprise a plurality of preform components tacked together to form a shape of the product. The plurality of preform components may comprise any of one or more multi spar torque box components, one or more skin components. The preform components may form products, such as wings, particularly eVTOL aircraft wings, stabilisers, control surfaces.

The method and apparatus may be used for the manufacture of a composite product comprising multiple multi spar torque box components and upper and lower skin components. The composite product may comprise any of a wing, a stabiliser, a control surface. The multiple multi spar torque box components may comprise spar configurations including any of vertical box-shaped spars, stretched X-shaped spars, box-shaped spars with hollow noodles.

The multi spar torque box components may be tapered. The multi spar torque box components may have unobstructed internal structures. This will limit internal build-up of resin and suit removal of mandrels. The multi spar torque box components may comprise box-shaped spars. This will facilitate preforming methods such as dry tow placement (DFP), braiding, filament winding. The multi spar torque box components preferably have no span wise kinks and gradual curvature. This will enable mandrel withdrawal.

The method and apparatus may be used for the manufacture of a composite product comprising a full span wing comprising multiple multi spar torque box components and upper and lower skin components. This employs a separation plane (during infusion), allowing removal of the upper or lower skin component after resin cure. This creates additional access for internal tool extraction, especially if the wing is tapered tip to tip from the centre, NDI and incorporation of ribs within the box-shaped components. Reattaching a skin component is carried out through mechanical fastening and/or adhesive bonding, using heated cure tooling. This concept eliminates a centreline joint and allows further ply optimisations and integration of internal details, but may incur a final bond cycle penalty, fastener weights etc.

The method and apparatus may be used for the manufacture of a composite product comprising a half span wing comprising multiple multi spar torque box components and upper and lower skin components. The preform assembly comprises removable internal tooling, which is extracted from a root end of the product. Using the method and apparatus to manufacture such a composite product reduces final assembly burdens, maximises automation, minimises processing times, minimises machining and assembly, but requires innovative rib insertion procedures and a centreline joint.

Two half span wings may be mechanically fastened together to create a full span wing. The two half span wings may be joined at a centre line inside of a fuselage. The two half span wings may be joined at a centre line by an I-shaped rib.

The two half span wings may have a plurality of internal ribs. There may be a maximum of two internal ribs per torque box component. The two half span wings may comprise a rib at each wing tip. The ribs may be composite ribs, e.g. carbon epoxy. This will avoid inspection and galvanic issues. The ribs may be manufactured separately and slid into and secured in the half span wings.

The two half span wings may have thicknesses of skin components with a constant taper. The two half span wings may have skin components having one or more doubler ply sections or localised patch ply sections, which form a tapered increase in thickness to react to localised or point loads. The two half span wings may have skin components having one or more ply build-up sections. These may be required to react to localised loads inside the wings. The doubler ply sections and ply build-up sections may be added outwards of internal mandrels to preserve clean internal lines of the wings. The doubler ply sections and ply build-up sections may be smoothed/faired in an in-wind direction. The doubler ply sections and ply build-up sections may be located on any of a lower skin component boom area, a centre line joint, a wing tip. The doubler ply sections and ply build-up sections may be integrated into edges of skin components.

The two half span wings may have one or more access panels. These may be positioned at leading edge (LE) and trailing edge (TE) spars.

The two half span wings may have multi C-shaped spar torque box components and a removable skin component. The multi C-shaped spar torque box components may be infused with resin with the removable skin component in place and the removable skin component removed after cure. The removable skin component may be mechanically fastened or paste/film adhesive bonded to the multi C-shaped spar torque box components. A removable skin component facilitates a smooth aerodynamic outer surface, through enabling removal of three piece internal mandrels which have complex doubler rebates, access for multiple internal rib assembly, improved access for NDI techniques and the manufacture of single piece, full span torque box components, tapering from the centreline and simplifying the centreline joint.

The two half span wings may have foam filled aerodynamic-shaped cavities above and below multiple multi spar torque box components. This configuration has simplified box-shaped spars with vertical webs. The foam filled aerodynamic-shaped cavities may have integrated doubler ply sections and localised ply build-up sections. Foam solutions can be employed to reduce weight of the wing. Further, foam inserted between box spars and skin components allows the application of internal doubler ply sections without affecting the outer aerodynamic profile of the wing. Additionally, if the box elements are identical, this will assist preform automation.

The two half span wings may have multiple multi spar torque box components with areas of integrated foam core. The major advantages of such sandwich composites over conventional materials are that sandwich composites (1) have a low overall density, a high strength-to-weight ratio, and a high stiffness-to-weight ratio; (2) are capable of providing good thermal and acoustic insulation; and (3) have uniform energy absorption capacity. The range of foams, for eVTOL and UAM is much wider than commercial aerospace because the flight envelope and exposure to aggressive fluids is significantly different to commercial aerospace.

The invention may also be understood with reference to the embodiments set out in the following numbered clauses:
Clause 1. A resin transfer injection method for manufacturing a composite product comprising:
   fitting a preform assembly, comprising a product preform fashioned to define a shape of the product, between first and second tools;
   allowing the first and second tools and the preform assembly to reach at least a predefined temperature;
   using at least one spacing device to form a first cavity between the preform assembly and the first tool and a second cavity between the preform assembly and the second tool;
   establishing a partial vacuum between the first and second tools;
   injecting a volume of pressurised preheated resin simultaneously into the first and second cavities;
   using injection pressure of the resin and the partial vacuum to move the resin throughout the first and second cavities and start infusion of the resin into the product preform of the preform assembly simultaneously from the first and second cavities;
   closing the first and second tools to reduce the first and second cavities and apply pressure to accelerate infusion of the resin into the product preform of the preform assembly simultaneously from the first and second cavities;
   allowing the resin infused into the product preform to cure to form the composite product.
Clause 2. A method according to clause 1 in which allowing the preform assembly to reach at least a predefined temperature comprises any of fitting a preform assembly preheated to the predefined temperature into a heated cavity between the first and second tools, fitting a room temperature preform assembly into a heated cavity between the first and second tools and allowing the preform assembly to be heated to at least the predefined temperature. Clause 3. A method according to clause 1 or 2 in which the predefined temperature is any of an injection temperature of resin, a resin cure temperature.
Clause 4. A method according to any preceding clause in which the first cavity and the second cavity are sized to accommodate the volume of resin and achieve a predefined volume fibre (Vf) of the product.
Clause 5. A resin transfer injection apparatus for manufacturing a composite product comprising:
   first and second tools, fashioned to at least partially correspond with first and second outer edges of the product;
   a preform assembly, comprising a product preform fashioned to define a shape of the product, fitted between the first and second tools;
   at least one heater which allows the first and second tools and the preform assembly to reach at least a predefined temperature;
   at least one spacing device to form a first cavity between the preform assembly and the first tool and a second cavity between the preform assembly and the second tool;
   a tool movement mechanism for closing and opening the first and second tools;
   at least one vacuum pump which establishes a partial vacuum between the first and second tools; and
   a resin injection system which injects a volume of pressurised preheated resin simultaneously into the first and second cavities,
   wherein injection pressure of the resin and the partial vacuum moves the resin throughout the first and second cavities and starts infusion of the resin into the product preform of the preform assembly simultaneously from the first and second cavities, the first and second tools are closed to reduce the first and second cavities and apply pressure to accelerate infusion of the resin into the product preform of the preform assembly simultaneously from the first and second cavities and the resin is allowed to cure to form the product.
Clause 6. An apparatus according to clause 5 in which the first and second tools comprise outer mould line tools, fashioned to at least partially correspond with first and second outer edges of the product.
Clause 7. An apparatus according to clause 5 or clause 6 in which the preform assembly comprises one or more inner mandrels and one or more outer mandrels.
Clause 8. An apparatus according to any of clauses 5 to 7 in which the preform assembly comprises a first key block at a first periphery of the assembly and a second key block at a second, opposite, periphery of the assembly.
Clause 9. An apparatus according to any of clauses 5 to 8 in which the at least one spacing device comprises any of at least one gripper, at least one first resilient element between a first outer edge of the preform assembly and the first tool to form the first cavity therebetween and at least one second resilient element between a second outer edge of the preform assembly and the second tool to form the second cavity therebetween.
Clause 10. An apparatus according to clause 9 in which the at least one first resilient element and the at least one second resilient element comprise any of a ring-shaped resilient element, a prism-shaped resilient element, a folded leaf spring, a top hat-shaped spring, a sine wave-shaped spring, a hook-shaped spring, an open cell foam, a moving cam.
Clause 11. An apparatus according to any of clauses 5 to 10 further comprising one or more vacuum seals positioned between the first tool and the second tool comprising any of a compliant O ring, a sliding O ring, an inflatable seal.
Clause 12. An apparatus according to clause 11 in which the vacuum seals are used in conjunction with a resin stop.
Clause 13. An apparatus according to any of clauses 5 to 12 further comprising one or more fasteners which provide fastening for the product preform, comprising any of self-adhesive heat resistant tape, one or more grip strips, one or more shear pins, one or more lock-in tabs, one or more clamp plates, one or more bands, one or more perforated caul plates.
Clause 14. An apparatus according to any of clauses 5 to 13 further comprising one or more spacers which provide support for the product preform.
Clause 15. An apparatus according to clause 14 in which the one or more spacers comprise any of one or more inflatable pressure tubes, one or more collapsible grooved triangular prisms, one or more collapsible meshes.

### Description of the Figures

Embodiments of the disclosure will now be described, by way of example only, with reference to the following Figures in which:
Figure 1 is a schematic cross sectional representation of an embodiment of an apparatus according to the second aspect;
Figure 2 is a schematic cross sectional representation of a first embodiment of a resilient element of the apparatus of Figure 1;
Figure 3 is a schematic cross sectional representation of a second embodiment of a resilient element of the apparatus of Figure 1;
Figure 4 is a schematic cross sectional representation of a third embodiment of a resilient element of the apparatus of Figure 1;
Figure 5 is a schematic cross sectional representation of a fourth embodiment of a resilient element of the apparatus of Figure 1;
Figure 6 is a schematic cross sectional representation of a fifth embodiment of a resilient element of the apparatus of Figure 1;
Figure 7 is a schematic cross sectional representation of a sixth embodiment of a resilient element of the apparatus of Figure 1;
Figure 8 is a schematic cross sectional representation of a seventh embodiment of a resilient element of the apparatus of Figure 1;
Figure 9 is a schematic cross sectional representation of a first embodiment of a vacuum seal of the apparatus of Figure 1;
Figure 10 is a schematic cross sectional representation of a second embodiment of a vacuum seal of the apparatus of Figure 1;
Figure 11 is a schematic cross sectional representation of a first embodiment of a product preform fastener of the apparatus of Figure 1;
Figure 12 is a schematic cross sectional representation of a second embodiment of a product preform fastener of the apparatus of Figure 1;
Figure 13 is a schematic cross sectional representation of a third embodiment of a product preform fastener of the apparatus of Figure 1;
Figure 14 is a schematic cross sectional representation of a fourth embodiment of a product preform fastener of the apparatus of Figure 1;
Figure 15 is a schematic cross sectional representation of a fifth embodiment of a product preform fastener of the apparatus of Figure 1;
Figure 16 is a schematic cross sectional representation of a sixth embodiment of a product preform fastener of the apparatus of Figure 1;
Figure 17 is a schematic cross sectional representation of a seventh embodiment of a product preform fastener of the apparatus of Figure 1;
Figure 18 is a schematic cross sectional representation of a first embodiment of a product preform spacer of the apparatus of Figure 1;
Figure 19 is a schematic cross sectional representation of a second embodiment of a product preform spacer of the apparatus of Figure 1;
Figure 20 is a schematic cross sectional representation of a third embodiment of a product preform spacer of the apparatus of Figure 1;
Figure 21 is a schematic cross sectional representation of a method of manufacturing a composite product by the apparatus of Figure 1;
Figure 22(i) to (iv) are further schematic cross sectional representations of a method of manufacturing a composite product by the apparatus of Figure 1;
Figure 23 is a schematic cross sectional representation of a composite product manufactured by the apparatus of Figure 1;
Figure 24(i) to (v) are further schematic cross sectional representations of composite products manufactured by the apparatus of Figure 1;
Figure 25 is a further schematic cross sectional representation of the composite product of Figure 24(ii);
Figure 26 is a further schematic cross sectional representation of a composite product manufactured by the apparatus of Figure 1;
Figure 27 is a further schematic cross sectional representation of a composite product manufactured by the apparatus of Figure 1;
Figure 28 is a further schematic cross sectional representation of a composite product manufactured by the apparatus of Figure 1;
Figure 29 is a further schematic cross sectional representation of a composite product manufactured by the apparatus of Figure 1;
Figure 30 is a further schematic cross sectional representation of a composite product manufactured by the apparatus of Figure 1;
Figure 31 (i) and (ii) are schematic cross sectional representations of a further embodiment of an apparatus according to the second aspect;
Figure 32 are schematic cross sectional representations of examples of gripper fingers of Figure 31;
Figure 33 (i) to (vii) are schematic cross sectional representations of a gripper of Figure 31;
Figure 34 are schematic cross sectional representations of examples of gripper fingers of Figure 31;
Figure 35 (i) and (ii) are schematic cross sectional representations of a further embodiment of an apparatus according to the first aspect;
Figure 36 is a schematic cross sectional representation of a gripper of Figure 31;
Figure 37 (i) to (vii) are schematic cross sectional representations of a gripper of Figure 35;
Figure 38 (i) to (ii) are schematic cross sectional representations of a gripper of Figure 35, and
Figure 39 is a flow chart of an embodiment of a method according to the first aspect.

### Detailed Description

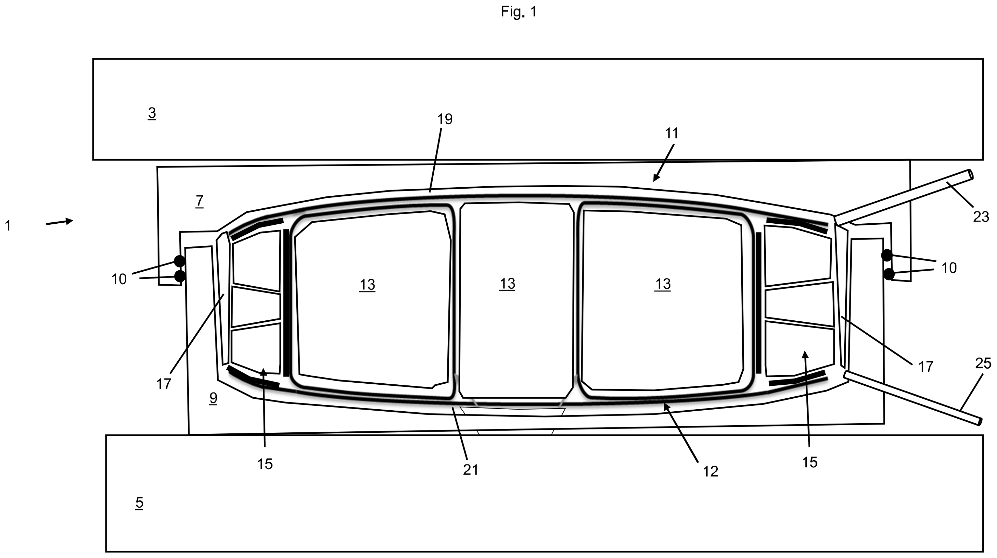

Referring to Figure 1, there is shown an embodiment of a resin transfer injection apparatus 1 for manufacturing a composite product. In this embodiment, the composite product is a wing, but it will be appreciated that the apparatus can be used in the manufacture of other products.

The apparatus 1 comprises a press having a first platen 3 and a second platen 5. The press may comprise a hydraulic, e.g. water, press. In this embodiment, the first platen 3 is an upper platen and the second platen 5 is a lower platen. The apparatus 1 comprises a first tool 7, which is secured to the first platen 3 of the press and a second tool 9, which is secured to the second platen 5 of the press. In this embodiment, the first tool 7 fits and slides over the second tool 9. In an alternative embodiment, the first tool 7 fits and slides into the second tool 9. In this embodiment, the first and second tools 7, 9 comprise coffin-type metal mould tools. The first and second tools 7, 9 are outer mould line (OML) tools, fashioned to at least partially correspond with first and second outer edges of the product. Seals 10 are provided between the first and second tools 7, 9.

The apparatus 1 comprises a preform assembly 11, fitted between the first and second tools 7, 9. In this embodiment, the preform assembly 11 comprises three inner mandrels 13. Each inner mandrel 13 is a single piece and may be solid or hollow. In this embodiment, the preform assembly 11 comprises two outer mandrels 15, which are multi part.

The preform assembly 11 comprises two key blocks 17, at a first periphery and at a second, opposite, periphery of the assembly 11. Prior to the insertion of the key blocks 17, cavities exist at the peripheries of the preform assembly 11. These allow access for holding fixtures to place the preform assembly 11 into a tool cavity of the second tool 9 and to remove the preform assembly 11 after resin infusion and cure.

The key blocks 17 are wedge-shaped, which helps position the preform assembly 11 centrally (in this case, in a horizontal plane) within the first and second tools 7,9. The key blocks 17 are actuated by the closing action of the first and second tools 7,9, i.e. the wedge shape consolidates the preform assembly 11 centrally in the horizontal plane in the tools 7, 9.

The key blocks 17 also avoid entrapment of the preform assembly 11 by any shrinking (from CTe delta) of the first and second tools 7,9. In theory trapping the preform assembly 11 would not occur in an "isothermal" manufacturing method using the apparatus 1, where the outer temperature is stable and the tool dimensions are static. However there are some cases where full isothermal conditions are not achieved and slight temperature gradients occur. In these cases, the key blocks eliminates the risk of tool trapping.

It will be appreciated that other numbers of inner mandrels, outer mandrels and key blocks can be used in other embodiments of the apparatus.

The preform assembly 11 further comprises a product preform 12 fashioned to define a shape of the product.

The apparatus 1 comprises at least one heater (not shown) which applies heat to the first and second tools 7, 9 so that they reach at least a predefined temperature and provide a heated cavity between the first and second tools 7,9. In this embodiment, the preform assembly 11 is preheated to at least the predefined temperature and then fitted into the heated cavity between the first and second tools 7,9. In an alternative embodiment, the preform assembly 11 is fitted at room temperature into a heated cavity between the first and second tools 7, 9 and heated to at least the predefined temperature. The predefined temperature may be an injection temperature of resin. In a preferred embodiment, the predefined temperature is a resin cure temperature, for example a 180°C resin cure temperature.

The apparatus 1 comprises at least one spacing device comprising at least one first resilient element (not shown) inserted between a first outer edge of the preform assembly 11 and the first tool 7 to form a first cavity 19 therebetween and at least one second resilient element (not shown) inserted between a second outer edge of the preform assembly 11 and the second tool 9 to form a second cavity 21 therebetween. The first cavity 19 and the second cavity 21 are sized to accommodate a predefined volume of resin and achieve a predefined volume fibre (Vf) of the product.

The apparatus 1 further comprises a tool movement mechanism (not shown) for closing the first and second tools 7,9. This compresses the first and second resilient elements and reduces the first and second cavities 19, 21. The tool movement mechanism also separates the first and second tools 7, 9 by a distance to decompress the first and second resilient elements and recreate the first and second cavities 19, 21.

The apparatus 1 comprises at least one vacuum pump (not shown) which establishes a partial vacuum between the first and second tools 7,9.

The apparatus 1 comprises a resin injection system (not shown) which injects a predefined volume of pressurised preheated resin simultaneously into the first and second cavities 19, 21. The resin injection system comprises a first edge injection inlet 23 which injects pressurised preheated resin into the first cavity 19 and a second edge injection inlet 25 which injects pressurised preheated resin into the second cavity 21. Edge injection of the resin substantially eliminates an expensive post-cure milling / trimming operation of the product preform.

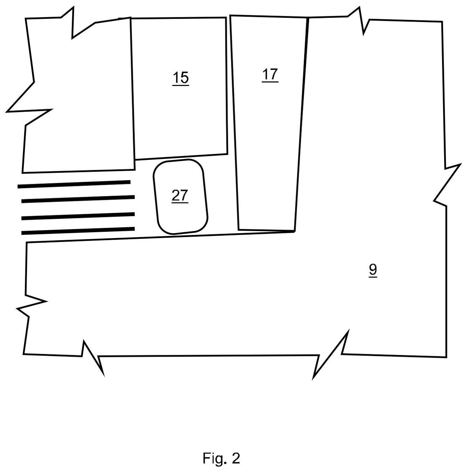

Referring to Figures 2 to 8, there is shown embodiments of resilient elements. The resilient elements are required as, when the first and second tools 7,9 are separated, there is a tendency for the preform assembly 11 to remain in place on the lower second tool 9 due to gravity. This would result in no cavity being present between the preform assembly 11 and the second tool 9 for injection of resin. In order to avoid this issue several types of resilient element are proposed. These are placed between an upper part of the preform assembly 11 and the first tool 7 and a lower part of the preform assembly 11 and the second tool 9. The lower resilient elements will be rated to accommodate the weight of the preform assembly 11. The resilient elements will activate when the first and second tools 7, 9 are separated, creating a push action between the preform assembly 11 and the first and second tools 7, 9 and forming the first and second cavities 19, 21. Placing the resilient elements above and below the preform assembly 11, centres the assembly in the vertical plane. The resilient elements are shaped to allow for little impeding of resin movement into the first and second cavities 19, 21.

The resilient elements comprise any of a ring-shaped resilient element, a prism-shaped resilient element, a folded leaf spring, a top hat-shaped spring, a sine wave-shaped spring, a hook-shaped spring, an open cell foam, a moving cam.

Referring to Figure 2, a ring-shaped resilient element 27 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The ring-shaped resilient element 27 has a cross section in the shape of any of a rectangle, as shown. It will be appreciated that, in other embodiments, other cross section shape may be used, such as any of an O, an X, a square, a U-cup. The ring-shaped resilient element 27 may be any of solid, hollow. The ring-shaped resilient element 27 may comprise a resilient material such as rubber. The ring-shaped resilient element 27 may be expendable.

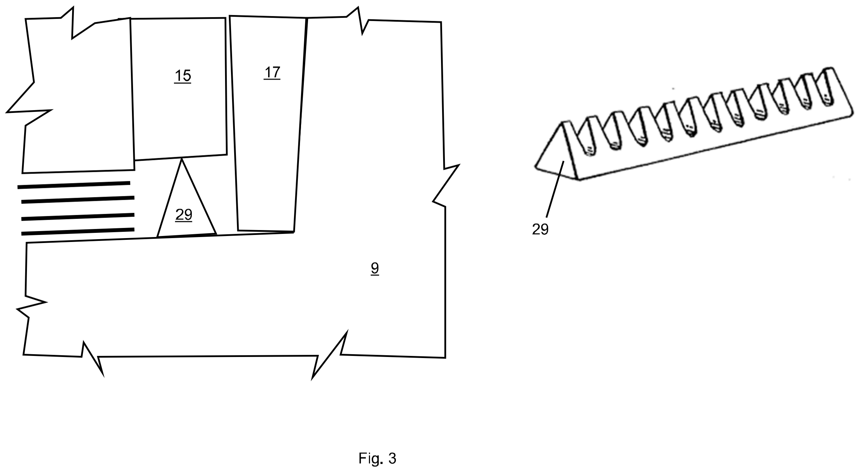

Referring to Figure 3, a prism-shaped resilient element 29 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The prism-shaped resilient element 29 comprises a grooved triangular prism-shaped element, as shown, which compresses under load, creating a springlike action. The prism-shaped resilient element 29 may be any of solid, hollow. The prism-shaped resilient element 29 may comprise a resilient material such as a polymeric material or rubber. The prism-shaped resilient element 29 may be expendable.

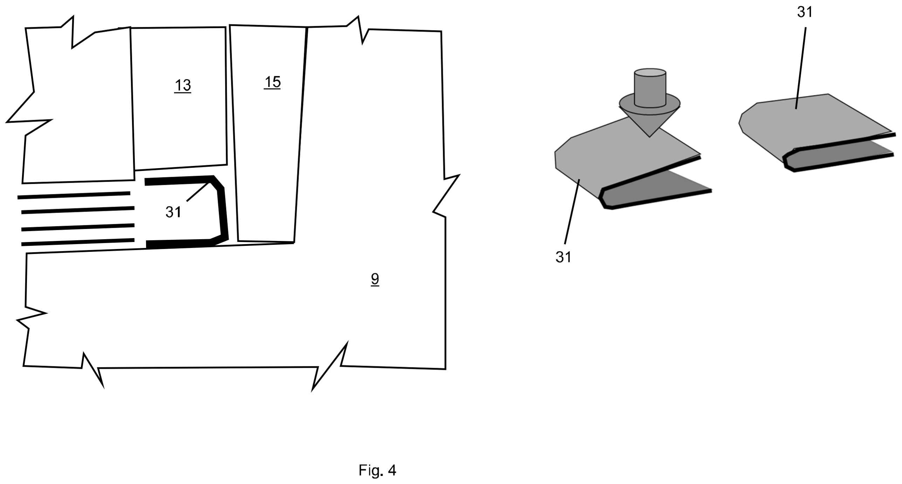

Referring to Figure 4, a folded leaf spring resilient element 31 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The folded leaf spring 31 comprises a folded metallic strip having one fold.

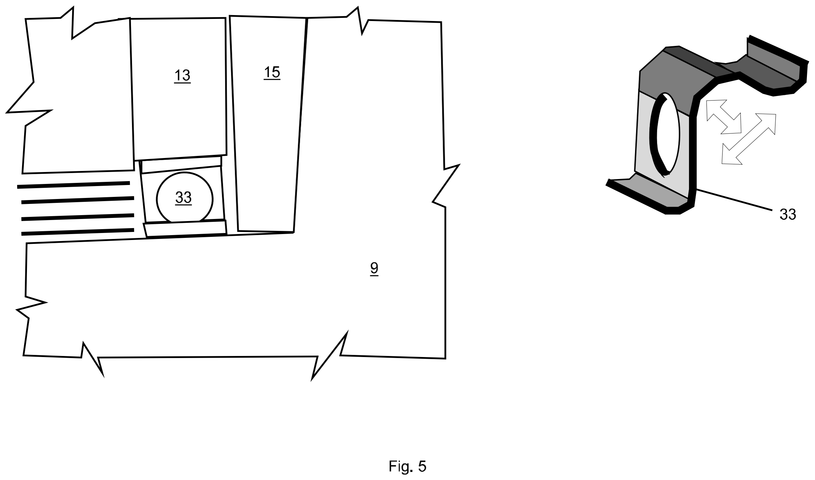

Referring to Figure 5, a top hat-shaped spring resilient element 33 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The top hat-shaped spring 33 comprises one or more resin access holes. The top hat-shaped spring 33 may be expendable. The top hat-shaped spring 33 may be extended into a sine-wave spring, as shown, with resin access holes.

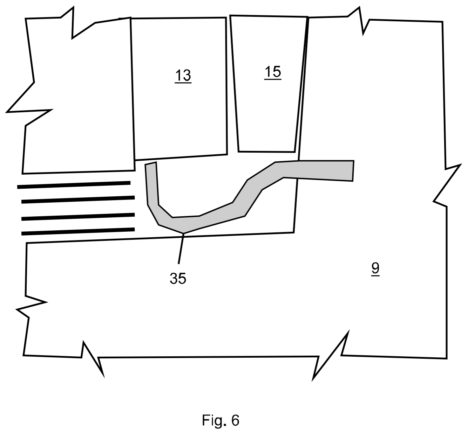

Referring to Figure 6, a hook-shaped spring resilient element 35 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The hook-shaped spring 35 comprises a plastic material and may be expendable.

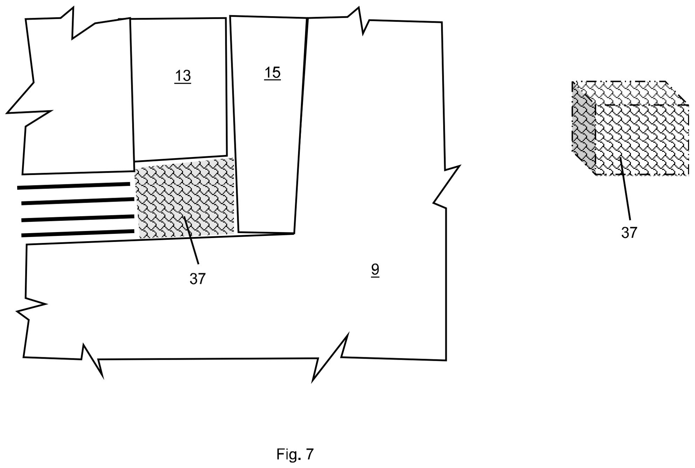

Referring to Figure 7, an open cell foam spring resilient element 37 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The open cell foam 37 may comprise a plastic material or a metallic material, depending on the required spring properties. **The** open foam cell 37 may be expendable.

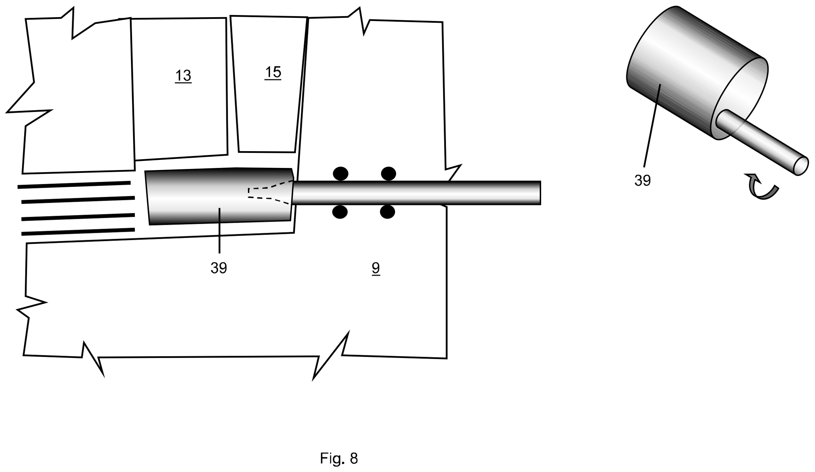

Referring to Figure 8, a moving cam resilient element 39 is placed between a lower edge of the outer mandrels 15 of the preform assembly 11 and the second tool 9. A similar resilient element (not shown) is placed between an upper edge of the outer mandrels 15 of the preform assembly 11 and the first tool 7. The moving cam 39 has a mechanism for turning the cam between operative and non-operative positions and for locking the cam in an operative position. The mechanism comprises a shaft 41 rotated from outside the first and second tools 7, 9. A seal 43 is provided around the shaft 41. This is required to maintain integrity of the partial vacuum within the first and second tools 7, 9. The moving cam 39 may comprise any of a metallic material, a polymer material. The moving cam 39 may be detachable after each resin infusion and may be expendable.

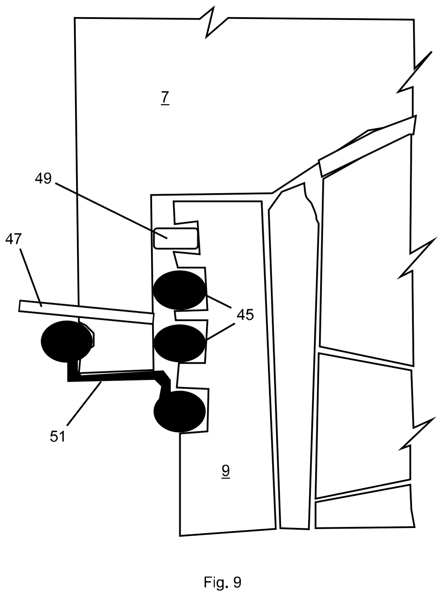

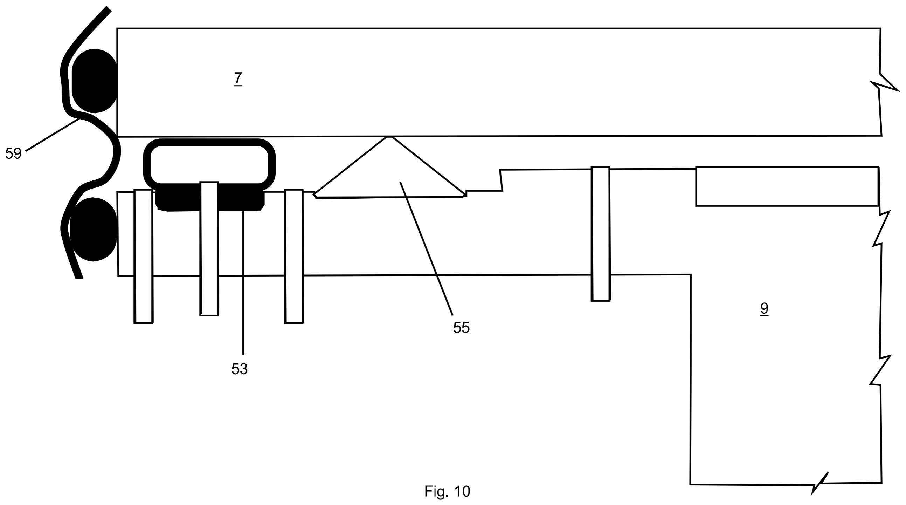

Referring to Figures 9 and 10, the apparatus 1 comprises at least one vacuum seal between the first and second tools 7,9. The opening and closing of the first and second tools 7, 9, during the manufacturing method, necessitates the development of a reliable, repeatable and durable "dynamic" tool sealing design. The vacuum seals may comprise a sliding O ring or an inflatable seal.

Referring to Figure 9, a double sliding O ring vacuum seal 45 is placed between the first tool 7 and the second tool 9. The seal 45 may comprise an elastomeric material. The double sliding O ring vacuum seal 45 comprises two O rings and has a vacuum line 47 between them, to extract air during minor breakdowns in the vacuum integrity. The seal 45 is used in conjunction with a compressed cork resin stop 49 and a peripheral looped bag seal 51. The seal 51 may comprise a moulded polymeric material or a nylon bagging material with edge sealant. Such a quadruple seal assembly is recommended to guarantee vacuum integrity and seal longevity.

Referring to Figure 10, an inflatable seal 53 is placed between the first tool 7 and the second tool 9, which, when inflated, expands to seal the cavity between the tools. The seal 53 may be hollow and may comprise a reinforced elastomer material, e.g. a reinforced silicone rubber. The inflatable seal 53 is used in conjunction with elastomeric prism resin stop 55. A vacuum line 57 is positioned between the resin stop 55 and the inflatable seal 53. The inflatable seal 53 is also used in conjunction with a peripheral looped bag 59. This may comprise a moulded polymeric material or a nylon bagging material with edge sealant. This is recommended to act as a safeguard should the resin stop and primary vacuum inflatable seal fail.

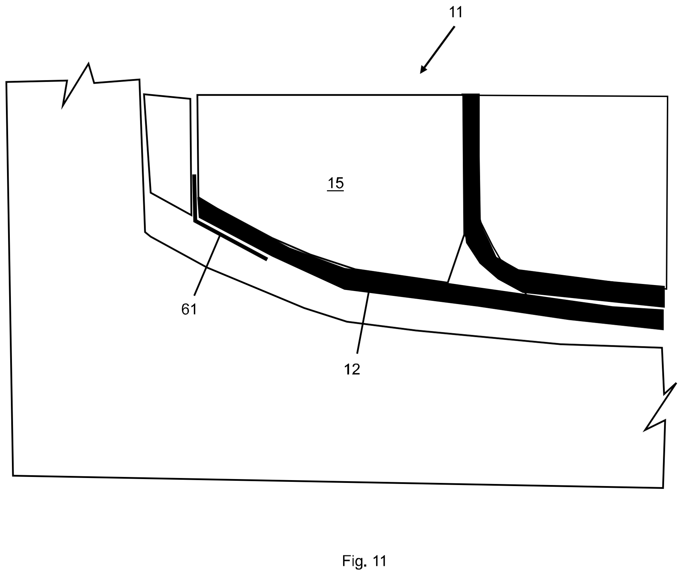

Referring to Figures 11 to 18, the apparatus 1 comprises one or more fasteners which provide fastening for the product preform 12. This may be required if, after the preform assembly 11, including the product preform 12, reaches the predefined temperature e.g. a 180°C resin cure temperature, the bond between at least some plys and/or components of the preform becomes weak and, when the first and second tools 7, 9 are separated to reform the first and second cavities 19, 21, at least some of the plys and/or components may become detached into the cavities 19, 21. This could result in obstruction of the flow of the resin in the cavities 19, 21, ply/component distortion, areas of high Vf, wrinkles etc.

The one or more fasteners may comprise any of self-adhesive heat resistant tape, one or more grit strips, one or more shear pins, one or more lock-in tabs, one or more clamp plates, one or more bands, one or more perforated caul plates.

Referring to Figure 11, self-adhesive, heat-resistant tape 61 is applied between the product preform 12 and an outer mandrel 15 of the preform assembly 11. The tape 61 may be applied up to an end of part (EOP) line (not shown).

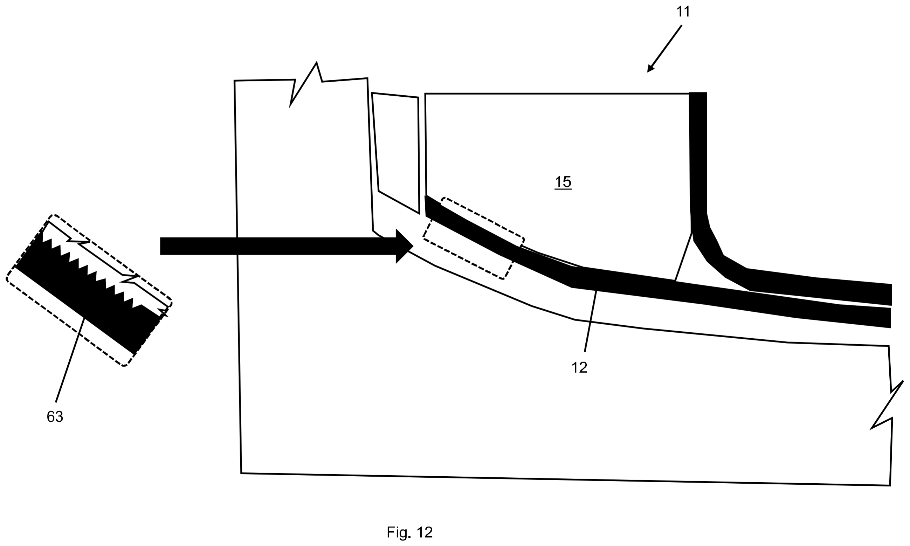

Referring to Figure 12, a grit strip 63 is applied over part of the product preform 12, up to an EOP line (not shown), and into an outer mandrel 15 of the preform assembly 11. The grit strip 63 has a roughened or textured surface.

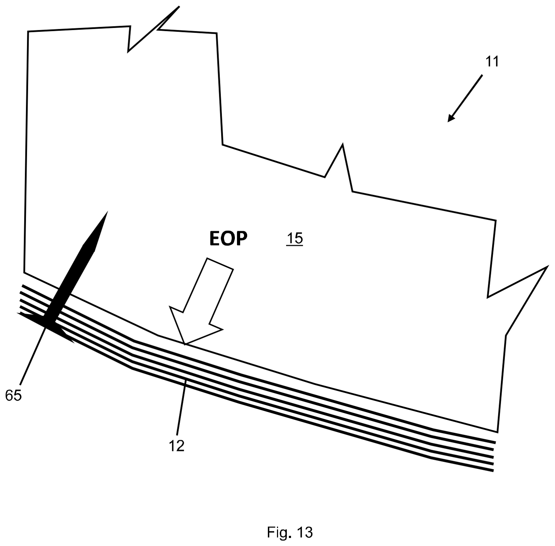

Referring to Figure 13, a shear pin 65 is applied through a part of the product preform 12, up to an EOP line (not shown), and into an outer mandrel 15 of the preform assembly. The shear pin 65 may comprise a polymeric material. The shear pin 65 is a needle-type pin with a cap, to avoid having to drill the preform 12.

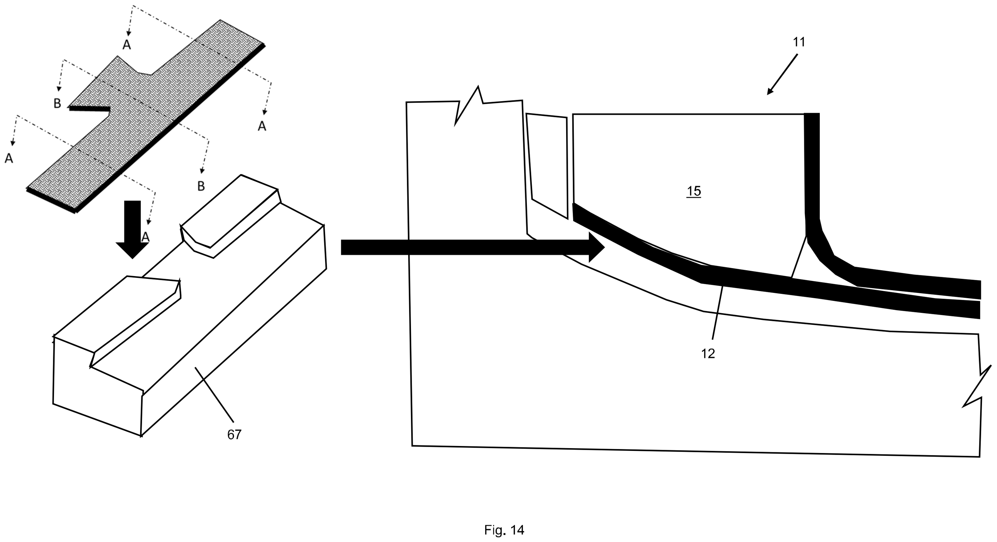

Referring to Figure 14, a lock-in tab 67 is used to lock the product preform 12 to an outer mandrel 15 of the preform assembly 11. The lock-in tab 67 may be trimmed post cure of the resin.

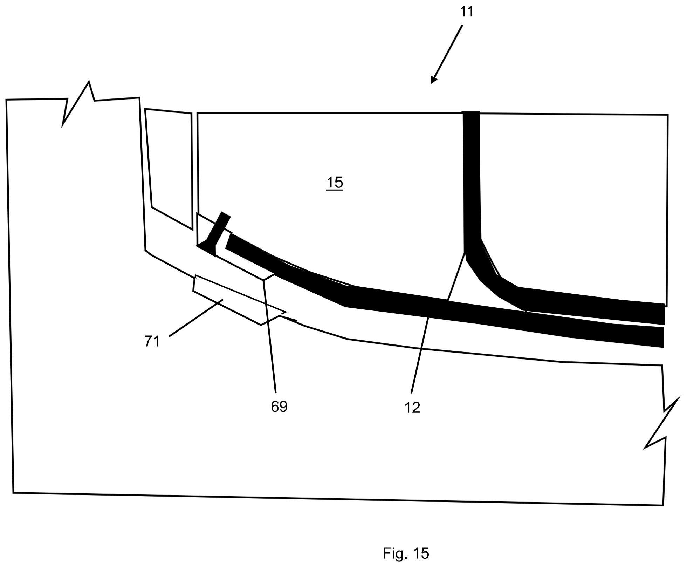

Referring to Figure 15, a clamp plate 69 is mechanically fastened, outside the EOP line (not shown), between the product preform 12 and an outer mandrel 15 of the preform assembly 11. The clamp plate 69 nests into a groove 71 provided in the second tool 9 when the tools are closed.

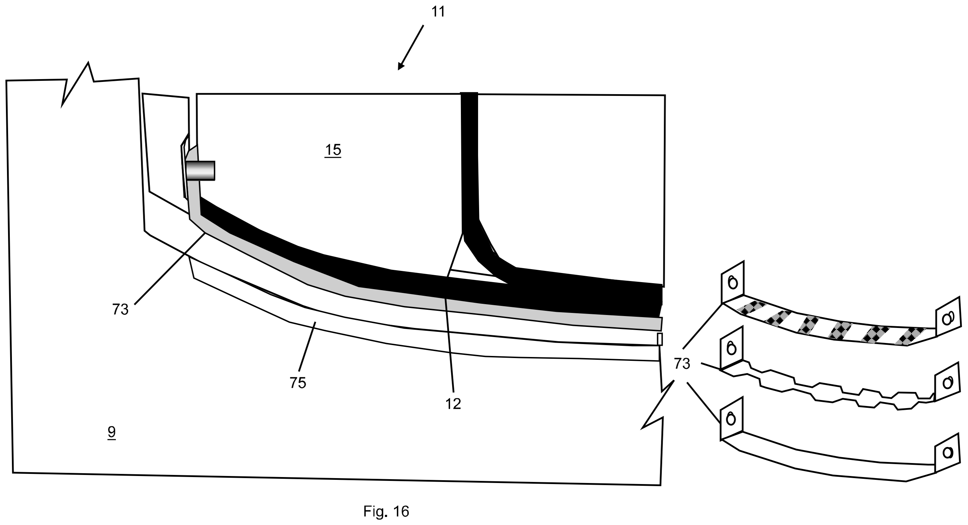

Referring to Figure 16, at least one band 73 straddles the product preform 12 and is mechanically locked into place on an outer mandrel 15 of the preform assembly 11, e.g. using pins. Three bands may be used. The band 73 may comprise a polymeric material, e.g. PTFE or a metallic material. The band 73 may be perforated over a partial length thereof or over an entire length thereof. The band 73 may have portions of reduced width to form a dog bone-shaped profile. The band 73 locates in a saddle groove 75 provided in the second tool 9 when the tools are closed. As the area of the bands occupy is relatively small and these can be perforated or their width reduced, it is not expected to significantly affect resin wet-out time.

The or each band 73 may be combined with one or more clamp plates to form a skeleton fastener. The skeleton fastener may be applied around a periphery of product preform 12 or on sides of the product preform 12.

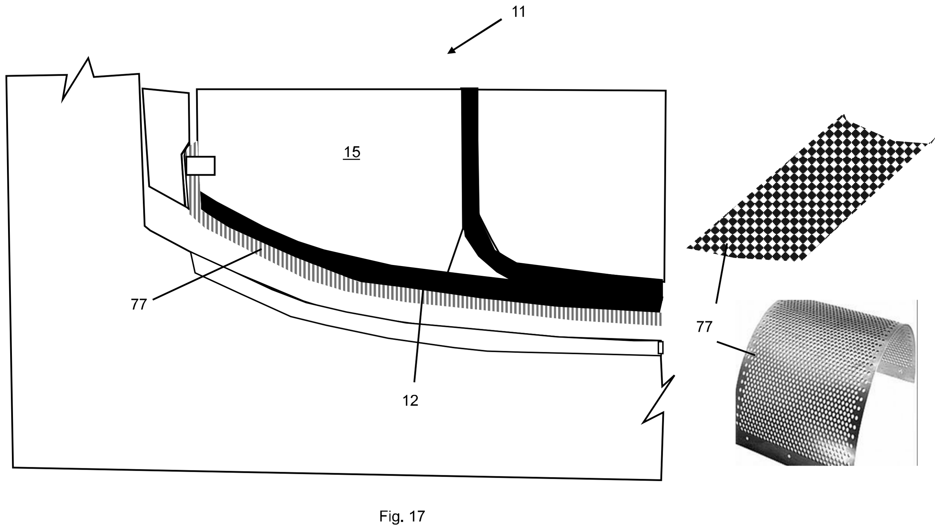

Referring to Figure 17, a perforated caul plate 77 is applied over a complete surface of the product preform 12. The perforated caul plate 77 may comprise a composite material or a metallic material.

An optimum fastener solution may comprise any of the above alone or in combination.

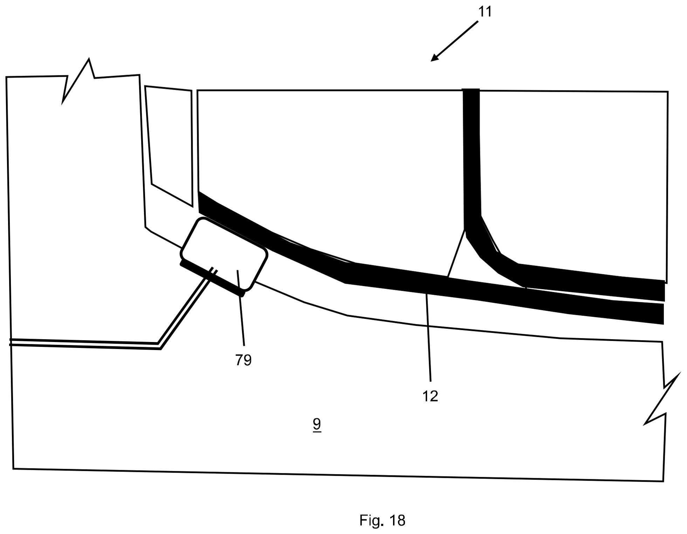

Referring to Figures 18 to 20, the apparatus 1 comprises one or more spacers which provide support for the product preform 12. The or each spacer may be positioned between the product preform 12 and the first and/or second tool 7, 9 to support the product preform 12. The one or more spacers may comprise any of one or more inflatable pressure tubes, one or more collapsible grooved triangular prisms, one or more collapsible meshes.

Referring to Figure 18, an inflatable pressure tube 79 is positioned between the product preform 12 and the second tool 9, to apply pressure onto the preform 12. The inflatable pressure tube 79 is selectively applied in local areas of the product preform 12, up to an EOP line (not shown), to allow resin access either side of the tube.

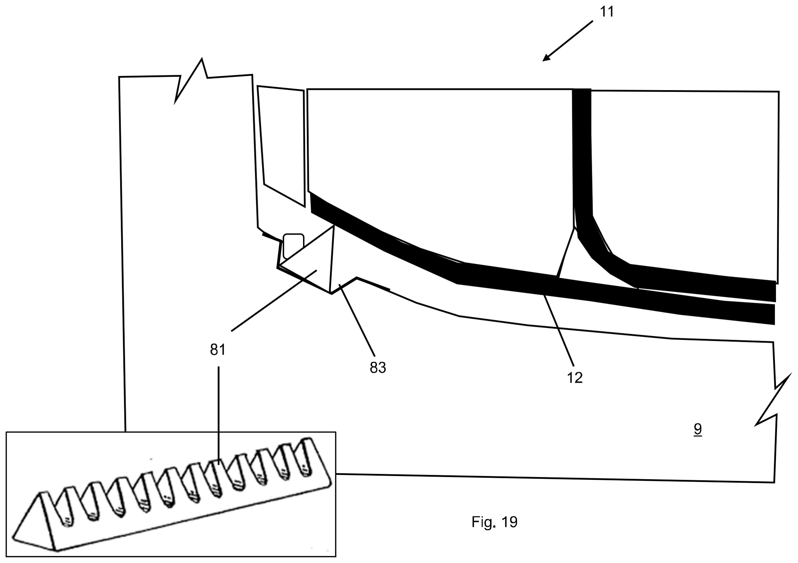

Referring to Figure 19, a collapsible grooved triangular prism 81 is positioned between the product preform 12 and the second tool 9, outside an EOP line. The collapsible grooved triangular prism 81 may be solid or hollow and may comprise a polymeric material, e.g. silicone. The collapsible grooved triangular prism 81 deflects into a groove 83 provided in the second tool 9 when the tools are closed. Resin is free to move either side of the prism 83.

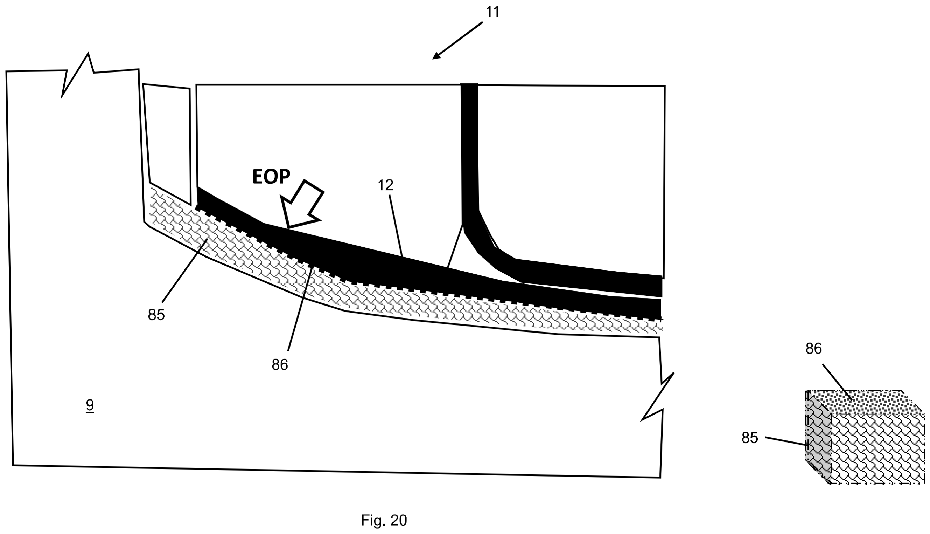

Referring to Figure 20, a collapsible mesh 85 is positioned between the product preform 12 and the second tool 9 and expands into the cavity holding the preform 12 in place. The collapsible mesh 85 is applied to the product preform 12 using a ply coating 86. The ply coating 86 is a perforated or porous peel ply coating which facilities release after resin cure.

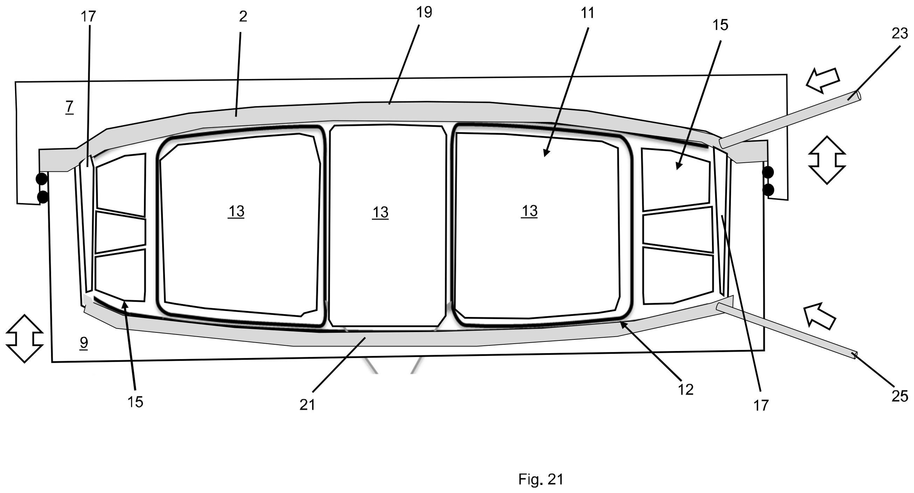

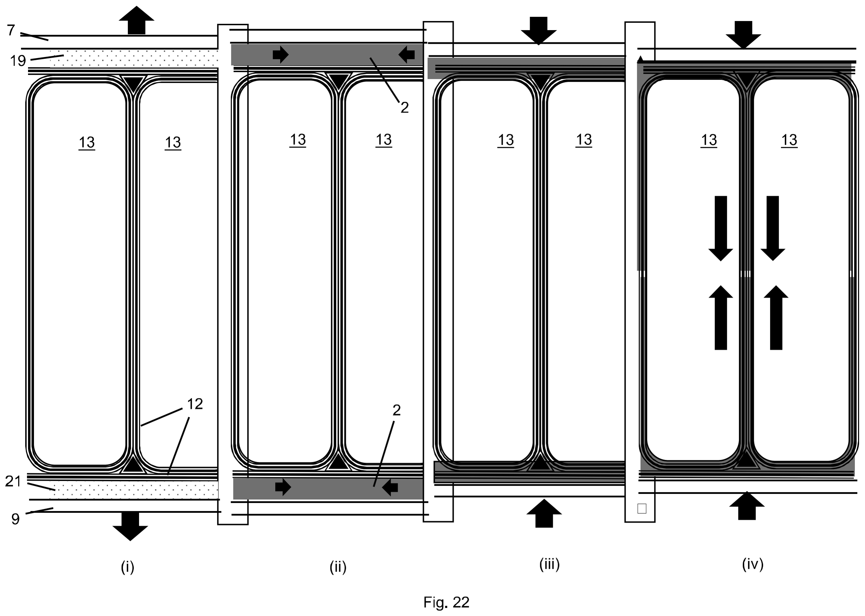

Referring to Figures 21 and 22, a resin transfer injection method for manufacturing a composite product using the apparatus of Figure 1 is described. In a first step of the method, first and second tools 7, 9 are secured to first and second platens (not shown) of a press. The first and second tools 7,9 are fashioned to at least partially correspond with first and second outer edges of the composite product. A preform assembly 11 is fitted between the first and second tools 7,9. The preform assembly comprises a product preform 12 fashioned to define a shape of the product, inner mandrels 13, outer mandrels 15 and key blocks 17.

The first and second tools 7, 9 and the preform assembly 11 are allowed to reach at least a predefined temperature. This is achieved by applying heat to the tools 7, 9, in situ and fitting the preform assembly 11, preheated to the predefined temperature, into a heated cavity between the first and second tools 7, 9. The predefined temperature may be an injection temperature of resin. In a preferred embodiment, the predefined temperature is a resin cure temperature, for example a 180°C resin cure temperature.

Pre-heating the preform assembly 11 before insertion into the heated cavity will save in product manufacturing time. However the hotter the assembly 11 becomes the less stable plies of the product preform 12 of the assembly 11 become, as the tack strength of the plies drops. This leaves the preform 12 open to handling damage and / or the risk of distortion during resin infusion. This may be addressed in a number of ways.

A temperature resistant preform 12 may be used. In this, the tacking is either a light-weight veil or matrix based powder, and activates at a temperature higher than the predefined temperature of the resin cure temperature. When the product preform 12 is at the resin cure temperature it therefore remains stable. This is possible because DFP is used to tack the preform plies and this is done at the elevated temperature, focused locally during tow placement (e.g. spot heated using a focused laser). The presence of the elevated temperature tacking will not affect the ply properties, provided compatible with the resin.

A staged / partial heating of the product preform 12 to a temperature lower than the tacking activation temperature can be used. The preform assembly is staged heated to an interim temperature, e.g. 110°C, lower than an off-the-shelf tacking activation temperature e.g. 120°C. Therefore the preform 12 remains stable to enable fitting into the heated tool cavity. Heating to the predefined, i.e. resin cure, temperature is carried out when the preform assembly 11, including the product preform 12, is in the heated tool cavity.

The product preform 12 is mechanically clamped to the inner mandrel 13 of the preform assembly 11. This could be achieved by using some of the options proposed for securing the lower skin component of the product preform, as described earlier.

At least one spacing device comprising a first resilient element (not shown) is inserted between a first outer edge of the preform assembly 11 and the first tool 7 to form a first cavity 19 therebetween. At least one spacing device comprising a second resilient element (not shown) is inserted between a second outer edge of the preform assembly 11 and the second tool 9 to form a second cavity 21 therebetween. The first cavity 19 and the second cavity 21 are sized to accommodate a required volume of resin and achieve a predefined volume fibre (Vf) of the product.

The fit of the first and second tools 7, 9 around the preform assembly 11 is then checked by closing the first and second tools 7, 9. This compresses the first and second resilient elements and reduces the first and second cavities 19, 21.

The first and second tools 7, 9 are then separated by a distance to decompress the first and second resilient elements and recreate the first and second cavities 19, 21. A partial vacuum is established between the first and second tools 7, 9, see Figure 22 (i). The system is then leak tested.

A required volume of pressurised preheated resin 2 is injected simultaneously into the first and second cavities 19, 21, see Figure 22 (ii), using the resin inlets 23, 25 (Figure 21). After injection of the volume of pressurised preheated resin, injection valves are closed and the resin is trapped between the first and second tools 7, 9.

The injection pressure of the resin and the partial vacuum is used to move the resin 2 throughout the first and second cavities 19, 21. Infusion of the resin 2 into the product preform 12 of the preform assembly 11 starts simultaneously from the first and second cavities 19, 21. As soon as the resin 2 touches the surface of the product preform 12, it starts to infuse through the preform thickness, in the vertical plane, and the vacuum starts to suck resin 2 into the preform 12.

The platens 3, 5 of the press are used to close the first and second tools 7, 9 to reduce the first and second cavities 19, 21 and apply pressure to accelerate infusion of the resin 2 into the product preform 12 of the preform assembly 11 simultaneously from the first and second cavities 19, 21, see Figure 22 (iii) and (iv). After closing the first and second tools 7, 9 pressure applied to the tools 7, 9 by the press can be reduced or turned off. The press may be locked in place.

The resin 2 infused into the product preform 12 is then allowed to cure to form the composite product. The first and second tools 7, 9 are opened to remove the product. The key blocks 17 are withdrawn immediately after tool opening, at elevated temperature. The multi part outer mandrels 15 are then removed, by first removing an inner section and then removing the two outer sections. The inner mandrels 13 are then removed to reveal the composite product.

Selection of a particular resin can be made according to any of operational requirements, isothermal properties (viscosity envelopes at cure temperature), budget. Operational requirements for eVOTL allow consideration of polymer groups other than epoxy such as vinyl ester.

It will also be of utmost importance to base selection of a particular resin on required structural performance of the composite product, since weight of the product will be paramount. Also, if it is assumed that the target Vf for the major structural items of the product is 60%, low viscosity at the injection temperature is needed. For isothermal operation of the method, the particular resin which is selected should have identical cure and injection temperatures.

The main focus for an acceptable resin may be epoxy. This is highly structural, so low product structural risk, with excellent fluid resistance and moderate cost.

Other polymer groups could be used, such as any of bismalemide, (BMI), polyimide (PI), benzoxazine (BZ), phthanitrile. These offer much higher Tg and thermal properties.

Resins suitable for eVOTL and UAM fall into the following classifications.

### (i) Isothermal resins

The resin injection is carried out at or near the cure temperature. This widens the material options for the tools, but requires handling of "hot" tools and mandrels. Such isothermal resins will also result in shortening the window for injection of the resin. Isothermal resin variants comprising epoxy-based resins are examples of preferred resins.

### (ii) Snap / rapid cure RTM resins

Epoxy resins developed for automotive RTM can be considered as examples of preferred resins.

### (iii) Existing aerospace RTM resins (evaluated for isothermal injection parameters)

These resins are traditionally used in aerospace and can be considered as examples of preferred resins. Such resins are highly structural. Examples of preferred resin materials include Hexcel's RTM 6 and Solvay's Cycom 890.

### (iv) Low temperature processing and cure (and post cure) resins

Newly-developed epoxy resins are becoming available which are capable of being injected at low temperatures, offering promising structural properties. In some cases these resins offer a higher Tg and / or damage toughness. Such resins are as examples of preferred resins.

### (v) HPRTM resins (automotive)

Resins developed for the very high rate automotive market using high pressure RTM can be considered as preferred resins for the method .

### (vi) Vinyl Ester resins

These are lower cost resins with bespoke infusion properties. They can be considered as preferred resins depending on the Tg and chemical resistance required on a platform to platform basis. Supplier of examples of preferred resins are Dow / Derakane and Gurit.

The method and apparatus may be used in aerospace construction for the manufacture of composite products comprising any of wings, empennage, ailerons, fuselage parts, ailerons, rudders, control surfaces, flaps, vanes, spoilers.

The method and apparatus may be used in aerospace construction for the manufacture of composite products comprising any closed cell structure. The method and apparatus may be used in aerospace construction for the manufacture of composite products comprising any of wings, empennage, ailerons, rudders, control surfaces, flaps, vanes, spoilers, elevators, slats, doors.

The composite product comprises a dry fibre product preform, which may be a carbon dry fibre product preform. The dry fibre product preform may be formed from a plurality of tows by any of weaving, stitching, braiding and other textile technologies. The plurality of tows may be in the form of a fabric or may be in a unidirectional form. Using dry fibre for the product preform benefits from extended shelf life and elimination of the need for refrigeration.

The principal dry tow carbon fibre material of choice is intermediate modulus carbon fibre. A high strength fibre is also another lower cost option, incurring a weight penalty. Low areal weight is a key requirement for eVOTL. These fibre materials can be filament wound, braided and dry fibre placed and to some extent fabric wrapped or knitted socks.

An example of a preferred fibre material includes Hexcel 'HiTape'. In this Hexcel version, layers of thin, low-areal-weight thermoplastic filament veil are integrated to act as a binder, eliminating the need for powder binders historically used in dry materials for preforming and liquid moulding. The veil is applied to both sides of the carbon fibre "uni-tape" eliminating the need to use powder binder to hold the UD layers in place. HiTape is calibrated and is not a slit tape, so there is no edge 'fuzz' and there is less variation in width facilitating improved DFP processing. The thermoplastic veil also adds toughness to the final laminate, and Hexcel has demonstrated high material deposition rates can be achieved.

Other forms of raw material for composite products having large skin components is slit dry, uni-weave or uniaxial non crimp fabric.

The product preform may comprise a plurality of preform components tacked together to form a shape of the product. The plurality of preform components may comprise any of one or more multi spar torque box components, one or more skin components. The preform components may form products, such as wings, particularly eVTOL aircraft wings, stabilisers, control surfaces.

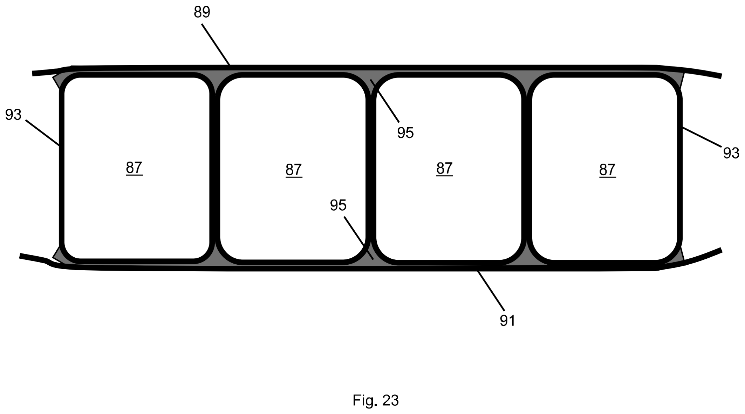

Referring to Figure 23, the method and apparatus may be used for the manufacture of a composite product comprising multiple multi spar torque box components 87, upper and lower skin components 89, 91, spars 93 and noodles 95. The composite product may comprise any of a wing, a stabiliser, a control surface. The multiple multi spar torque box components may comprise spar configurations including any of vertical box-shaped spars, stretched X-shaped spars, box-shaped spars with hollow noodles.

The multi spar torque box components may be tapered. The multi spar torque box components preferably have unobstructed internal structures. This will limit internal build-up of resin and suit removal of mandrels. The multi spar torque box components may comprise box-shaped spars. This will facilitate preforming methods such as dry tow placement (DFP), braiding, filament winding. The multi spar torque box components preferably have no span wise kinks and gradual curvature. This will enable mandrel withdrawal.

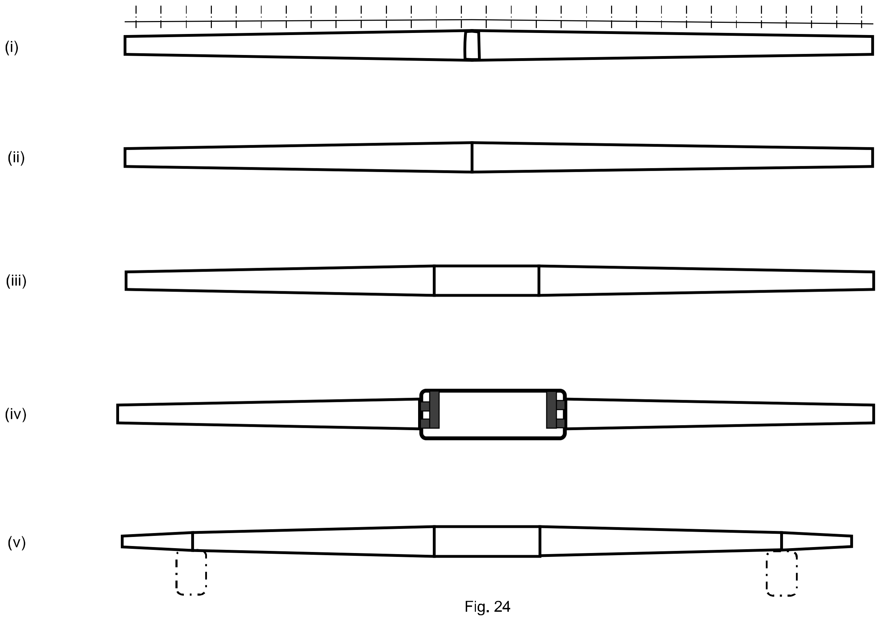

The method and apparatus may be used for the manufacture of a composite product comprising a full span wing, see Figure 24(i), comprising multiple multi spar torque box components and upper and lower skin components. This employs a separation plane (during infusion), allowing removal of the upper or lower skin component after resin cure. This creates additional access for internal tool extraction, NDI and incorporation of ribs within the box-shaped components. Reattaching a skin component is carried out through mechanical fastening and/or adhesive bonding, using heated cure tooling. This concept eliminates a centreline joint and allows further ply optimisations and integration of internal details, but may incur a final bond cycle penalty, fastener weights etc.

In a preferred embodiment, the method and apparatus are used for the manufacture of a composite product comprising a half span wing, see Figure 24(ii), comprising multiple multi spar torque box components and upper and lower skin components. The preform assembly comprises removable internal tooling, which is extracted from a root end of the product. Using the method and apparatus to manufacture such a composite product reduces final assembly burdens, maximises automation, minimises processing times, minimises machining and assembly, but requires innovative rib insertion procedures and a centreline joint.

Two half span wings may be mechanically fastened together to create a full span wing, see Figures 24(iii), 24(iv) and 24(v). The two half span wings may be joined at a centre line inside of a fuselage. The two half span wings may be joined at a centre line by an I-shaped rib.

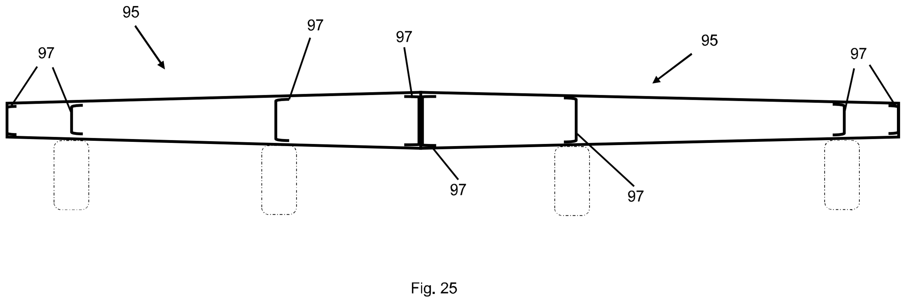

Referring to Figure 25, the two half span wings 95 may have a plurality of internal ribs 97. There may be a maximum of two internal ribs per torque box component. The two half span wings 95 may comprise a rib 97 at each wing tip. The ribs may be composite ribs, e.g. carbon epoxy. This will avoid inspection and galvanic issues. The ribs may be manufactured separately and slid into and secured in the half span wings.

The two half span wings 95 may have thicknesses of skin components with a constant taper. The two half span wings 95 may have skin components having one or more doubler ply sections. The two half span wings 95 may have skin components having one or more ply build-up sections. These may be required to react to localised loads inside the wings. The doubler ply sections and ply build-up sections may be added outwards of internal mandrels to preserve clean internal lines of the wings. The doubler ply sections and ply build-up sections may be smoothed/faired in an in-wind direction. The doubler ply sections and ply build-up sections may be located on any of a lower skin component boom area, a centre line joint, a wing tip. The doubler ply sections and ply build-up sections may be integrated into edges of skin components. The two half span wings 95 may have one or more access panels. These may be positioned at leading edge (LE) and trailing edge (TE) spars.

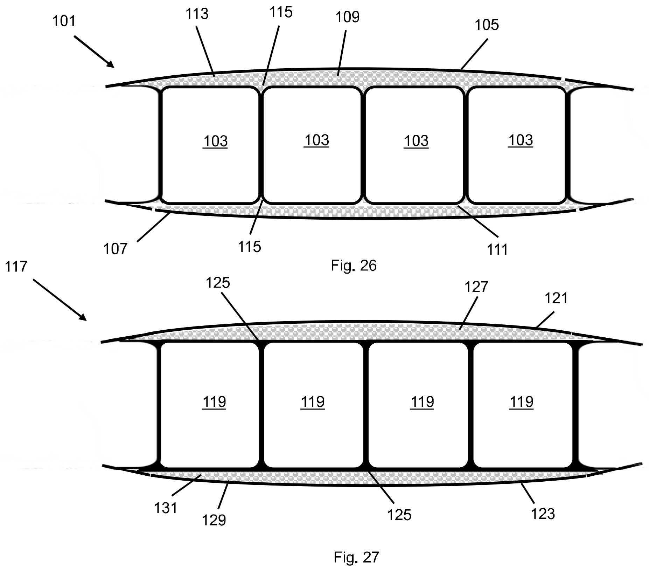

Referring to Figure 26, a half span wing 101 may comprise multiple multi spar torque box components 103, having simplified box-shaped spars with vertical webs, an upper skin 105 and a lower skin 107. Upper and lower aerodynamic-shaped cavities 109, 111 are provided above and below the torque box components 103. The cavities 109, 111 are filled with foam 113 to provide foam stiffening for the upper and lower skins 105, 107 and foam noodles 115. The foam-filled aerodynamic-shaped cavities 109, 111 may have integrated doubler ply sections and localised ply build-up sections.

Referring to Figure 27, a half span wing 117 may comprise multiple multi spar torque box components 119, again having simplified box-shaped spars with vertical webs, an upper skin 121, a lower skin 123 and conventional solid noodles 125. Upper and lower aerodynamic-shaped cavities 127, 129 are provided above and below the torque box components 119. The cavities 127, 129 are filled with foam 131 which provides foam stiffening for the upper and lower skins 121, 123. The foam-filled aerodynamic-shaped cavities 127, 129 may have integrated doubler ply sections and localised ply build-up sections.

The half span wings 101, 117, having multiple multi spar torque box components 103, 119 with areas of integrated foam core form sandwich composites. These have several benefits over conventional materials, such as (1) these have a low overall density, a high strength-to-weight ratio and a high stiffness-to-weight ratio, (2) are capable of providing good thermal and acoustic insulation and (3) have uniform energy absorption capacity. The foams 113, 131 may comprise any of polymetacrylimide, polyester, polyurethane. The range of foams, for eVTOL and UAM, is much wider than for commercial aerospace because the flight envelope and exposure to aggressive fluids is significantly different to commercial aerospace.

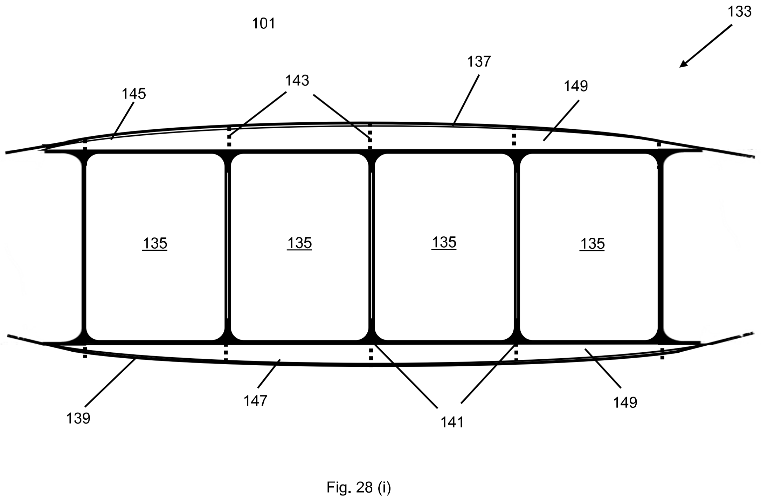

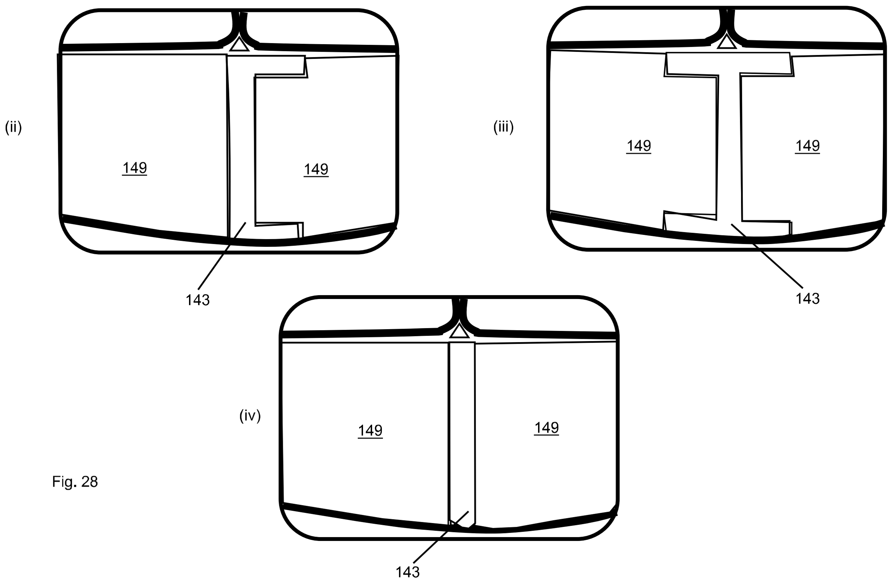

Referring to Figure 28 (i), a half span wing 133 may comprise multiple multi spar torque box components 135, an upper skin 137, a lower skin 139, conventional solid noodles 141 and inserts 143. Upper and lower aerodynamic-shaped cavities 145, 147 are provided above and below the torque box components 135 and these are filled with foam 149. The foam-filled aerodynamic-shaped cavities 145, 147 may have integrated doubler ply sections and localised ply build-up sections. The inserts 143 are provided through the foam 149. This allows the skins 137, 139 to be effective in global wing bending and increases the structural efficiency of the foam / skin structure. At least some of the inserts 143 may be dry carbon inserts, single or multiple ply. At least some of the inserts 143 may have C-shaped sections or I-shaped sections. It will be appreciated that other shaped sections, such as Z-shaped, J-shaped, top hat-shaped, may be used. The inserts 143 in the foam 149 provide increased structural properties of the foam 149 and efficient resin flow paths through the foam 149 to inner product preform structures.

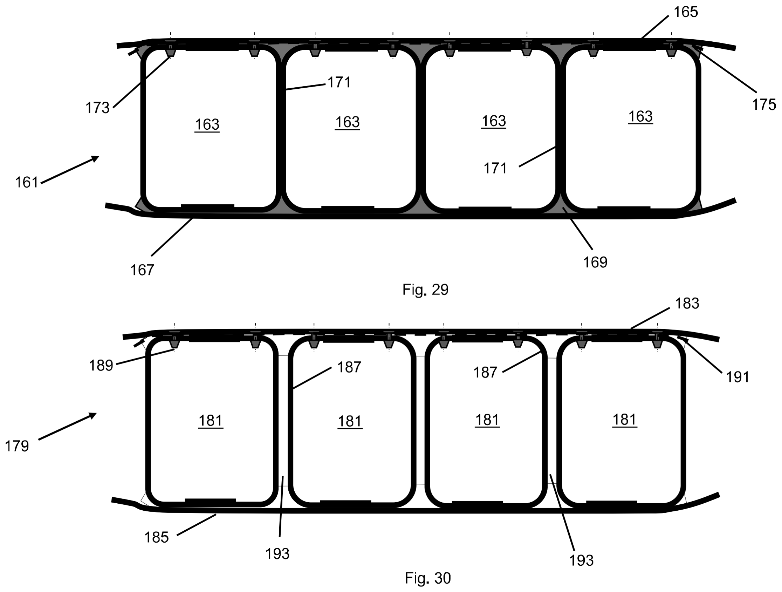

Referring to Figure 29, a half span wing 161 may comprise multiple multi spar torque box components 163, an upper skin 165, a lower skin 167 and conventional solid noodles 169. The multiple multi spar torque box components 163 comprise C shaped spars 171. The upper skin 165 is removably attached to the C shaped spars 171 by fasteners 173 and a release file 175.

Referring to Figure 30, a half span wing 179 may comprise multiple multi spar torque box components 181, an upper skin 183 and a lower skin 185 The multiple multi spar torque box components 181 comprise C shaped spars 187. The upper skin 183 is removably attached to the C shaped spars 187 by fasteners 189 and a release file 191. The C shaped spars 187 have foam 193 therebetween, which acts to stiffen the spars and provide noodles.

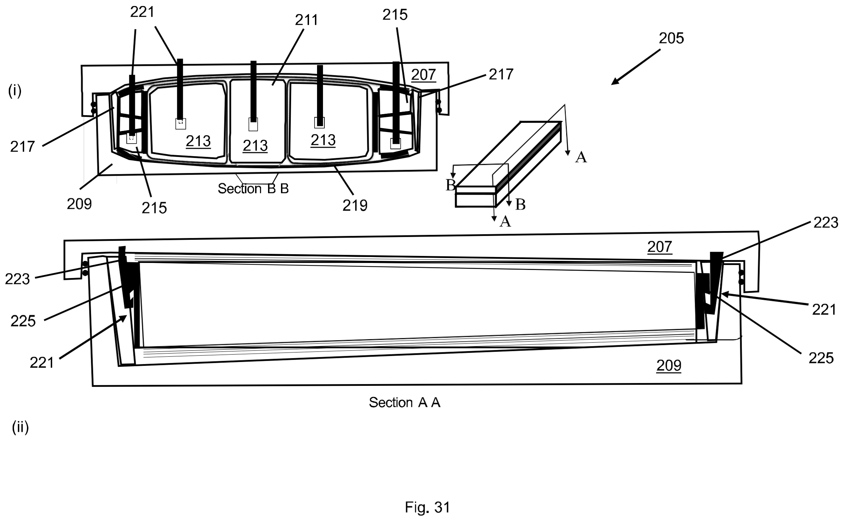

Referring to Figure 31, there is shown a further embodiment of a resin transfer injection apparatus 205 for manufacturing a composite product.

The apparatus 205 comprises a press having a first and second platen (not shown). The apparatus 205 comprises a first tool 207, which is secured to the first platen of the press and a second tool 209, which is secured to the second platen of the press. In this embodiment, the first tool 207 fits and slides over the second tool 209. The first and second tools 207, 209 are outer mould line (OML) tools, fashioned to at least partially correspond with first and second outer edges of the product.

The apparatus 205 comprises a preform assembly 211, fitted between the first and second tools 207, 209. In this embodiment, the preform assembly 211 comprises three inner mandrels 213. Each inner mandrel 213 is a single piece and may be solid or hollow. In this embodiment, the preform assembly 211 comprises two outer mandrels 215, which are multi part.

The preform assembly 211 comprises two key blocks 217, at a first periphery and at a second, opposite, periphery of the assembly 211. The key blocks 217 are wedge-shaped, which helps position the preform assembly 211 centrally (in this case, in a horizontal plane) within the first and second tools 207, 209.

It will be appreciated that other numbers of inner mandrels, outer mandrels and key blocks can be used in other embodiments of the apparatus.

The preform assembly 211 further comprises a product preform 219 fashioned to define a shape of the product.

The apparatus 205 comprises at least one heater (not shown) which applies heat to the first and second tools 207, 209 so that they reach at least a predefined temperature and provide a heated cavity between the first and second tools 207, 209. In this embodiment, the preform assembly 211 is fitted at room temperature into a heated cavity between the first and second tools 207, 209 and heated to at least the predefined temperature. The predefined temperature may be an injection temperature of resin.

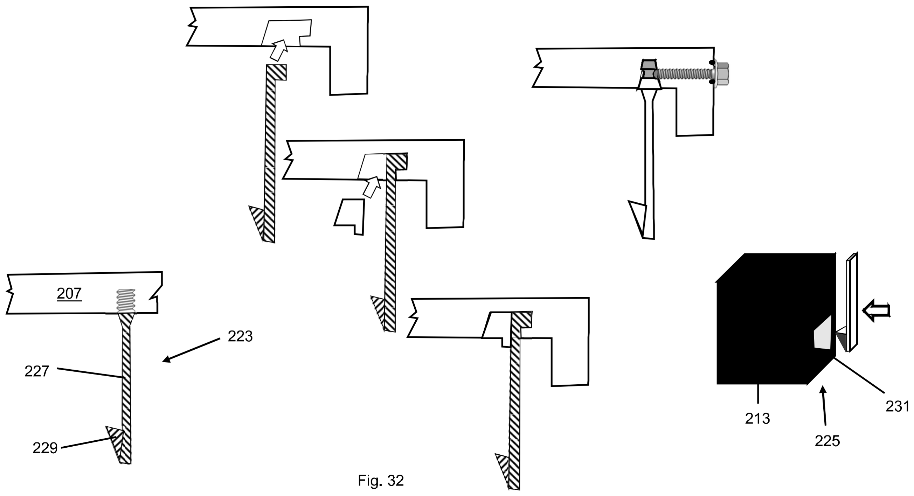

The apparatus 205 comprises a plurality of spacing devices comprising grippers 221. Each gripper 221 comprises a gripper finger 223 and a catch 225. Each gripper finger 223 comprises an elongate portion 227 and a protruding portion 229 attached to a first end of the elongate portion 227, Figure 32. A second end of the elongate portion 227 is secured to the first tool 207 by various devices, shown in Figure 32. Each catch 225 comprises a recess 231 of a mandrel 213, 215. For each gripper 221, a gripper finger 223 engages with a corresponding catch 225 to centre the preform assembly 211 when between the first and second tools 207, 209. The gripper fingers 223 of the grippers 221 may be made from any of steel, carbon fibre reinforced laminate, fibre reinforced polyamide, PAEK. The gripper fingers 223 of the grippers 221 may be reusable or expendable.

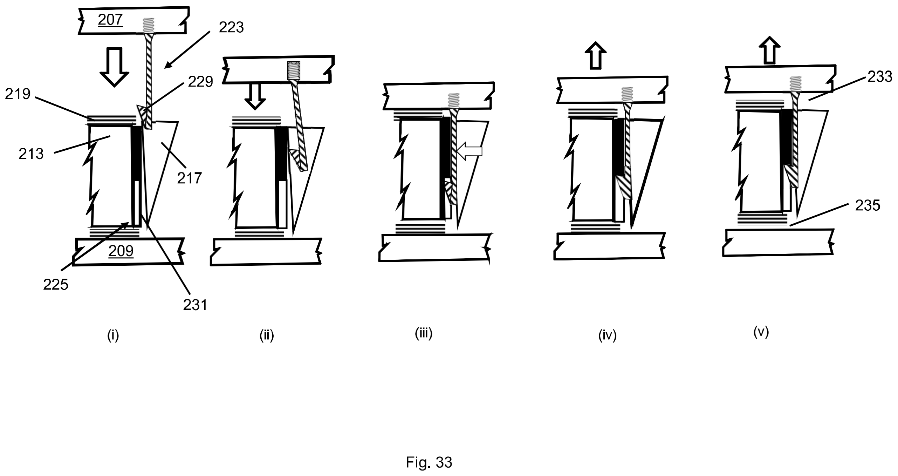

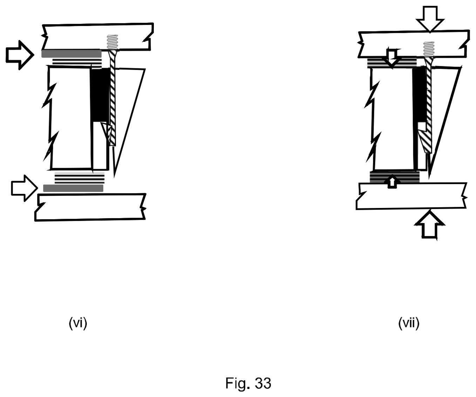

Referring to Figure 33 (i) to (iii), as the first tool 207 is lowered towards the second tool 209, each gripper finger 223 is deflected by the mandrel 213. A cavity (not shown) is provided in the key block 217 to accommodate the deflection of the gripper finger 223. As the first tool 207 reaches the product preform 219, each gripper finger 223 snaps into a corresponding catch 225 (Figure 33 (iii)). The protruding portion 229 of each gripper finger 221 is received in the recess 231 of the corresponding catch 225. The length of each recess 231 is sufficient for the protruding portion 229 to be received in the recess 231 and to form a gap between the protruding portion 229 and an upper edge of the recess 231, as shown.

Referring to Figure 33 (iv) to (v), as the first tool 207 is raised away from the second tool 209, the protruding portion 229 of each gripper finger 221 engages the upper edge of the recess 231 of the corresponding catch 225, as shown. At this position, the first tool 207 is lifted away from the product preform 219, creating a first cavity 233 between the first tool 207 and the product preform 219. As the first tool 207 is further raised away from the second tool 209, engagement of the gripper fingers 221 and corresponding catches 225 lifts the preform assembly 211 away from the second tool 209. This creates a second cavity 235 between the second tool 209 and the product preform 219. The first cavity 233 and the second cavity 235 are sized to accommodate a predefined volume of resin and achieve a predefined volume fibre (Vf) of the product.

The apparatus 205 comprises at least one vacuum pump (not shown) which establishes a partial vacuum between the first and second tools 207, 209. The apparatus 200 comprises a resin injection system (not shown) which injects a predefined volume of pressurised preheated resin simultaneously into the first and second cavities 233, 235, Figure 33 (vi). The first tool 207 is again lowered towards the second tool 209, Figure 33 (vii), and the injection pressure of the resin and the partial vacuum is used to move the resin throughout the first and second cavities 233, 235 and to infuse the resin into the product preform 219 to form the composite product on curing of the resin.

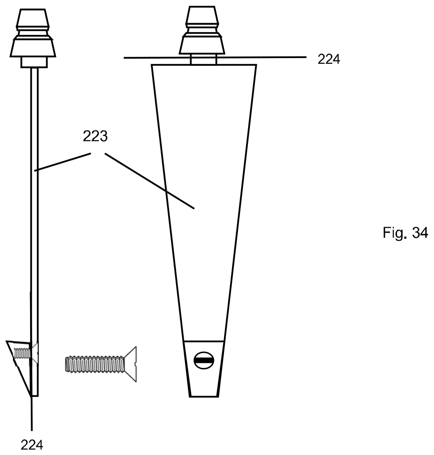

Post resin injection and curing, the product is removed from the apparatus 205. This is facilitated by shear planes 224 of the gripper fingers 223, Figure 34. These allow the gripper fingers 223 to be removed from the first tool 207 and/or allow the protruding portions 229 of the gripper fingers 223 to disengage from the recesses 231 of corresponding catches 225.

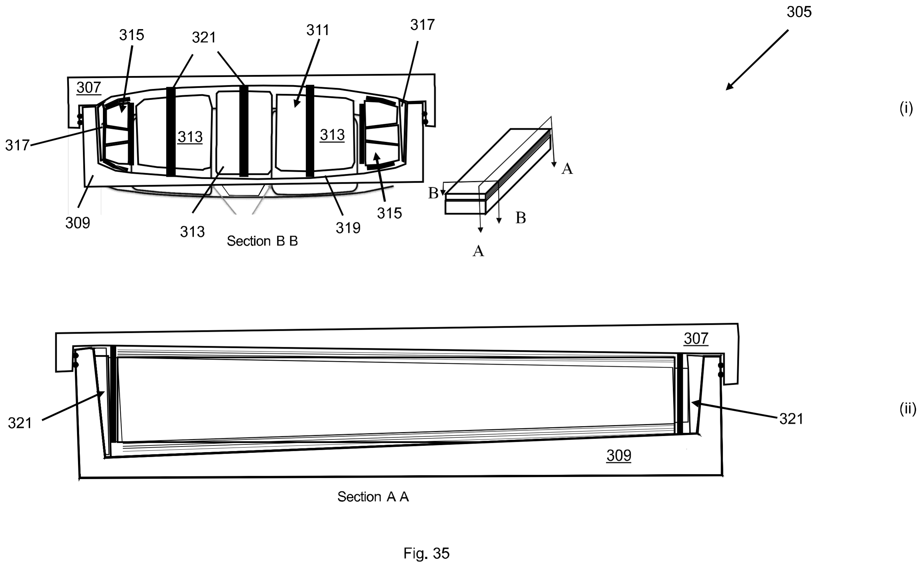

Referring to Figure 35, there is shown a further embodiment of a resin transfer injection apparatus 305 for manufacturing a composite product.

The apparatus 305 comprises a press having a first and second platen (not shown). The apparatus 305 comprises a first tool 307, which is secured to the first platen of the press and a second tool 309, which is secured to the second platen of the press. In this embodiment, the first tool 307 fits and slides over the second tool 309. The first and second tools 307, 309 are outer mould line (OML) tools, fashioned to at least partially correspond with first and second outer edges of the product.

The apparatus 305 comprises a preform assembly 311, fitted between the first and second tools 307, 309. In this embodiment, the preform assembly 311 comprises three inner mandrels 313. Each inner mandrel 313 is a single piece and may be solid or hollow. In this embodiment, the preform assembly 311 comprises two outer mandrels 315, which are multi part.

The preform assembly 311 comprises two key blocks 317, at a first periphery and at a second, opposite, periphery of the assembly 311. The key blocks 317 are wedge-shaped, which helps position the preform assembly 311 centrally (in this case, in a horizontal plane) within the first and second tools 307, 309.

It will be appreciated that other numbers of inner mandrels, outer mandrels and key blocks can be used in other embodiments of the apparatus.

The preform assembly 311 further comprises a product preform 319 fashioned to define a shape of the product.

The apparatus 305 comprises at least one heater (not shown) which applies heat to the first and second tools 307, 309 so that they reach at least a predefined temperature and provide a heated cavity between the first and second tools 307, 309. **In** this embodiment, the preform assembly 311 is fitted at room temperature into a heated cavity between the first and second tools 307, 309 and heated to at least the predefined temperature. The predefined temperature may be an injection temperature of resin.

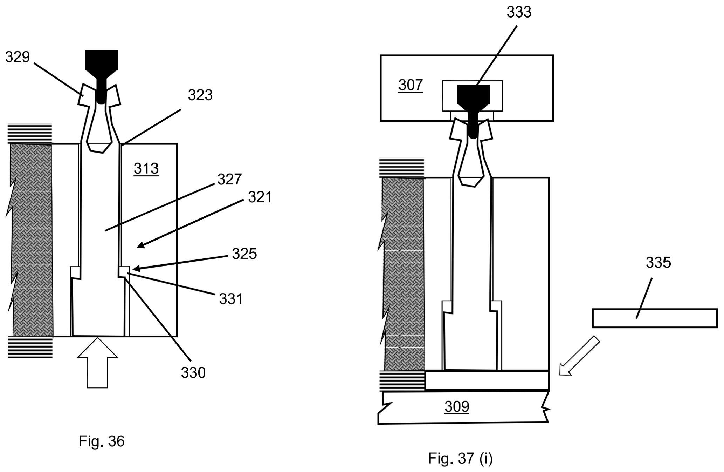

The apparatus 305 comprises a plurality of spacing devices comprising grippers 321. Each gripper 321 comprises a gripper plug 323 and a catch 325, Figure 36. Each gripper plug 323 comprises an elongate portion 327 and an expandable end portion 329 at a first end of the elongate portion 327 and a ridge 330 at a second end of the elongate portion 327. Each catch 325 comprises a recess 331 of a mandrel 313. Each gripper plug 323 is inserted into a cavity in a mandrel 313 from below and engages a fastener 333 in the first tool 307. For each gripper 321, a gripper plug 323 engages with a corresponding catch 325 to centre the preform assembly 311 when between the first and second tools 307, 309. The gripper plugs 323 of the grippers 321 may be made from any of fibre reinforced polyamide, PAEK.

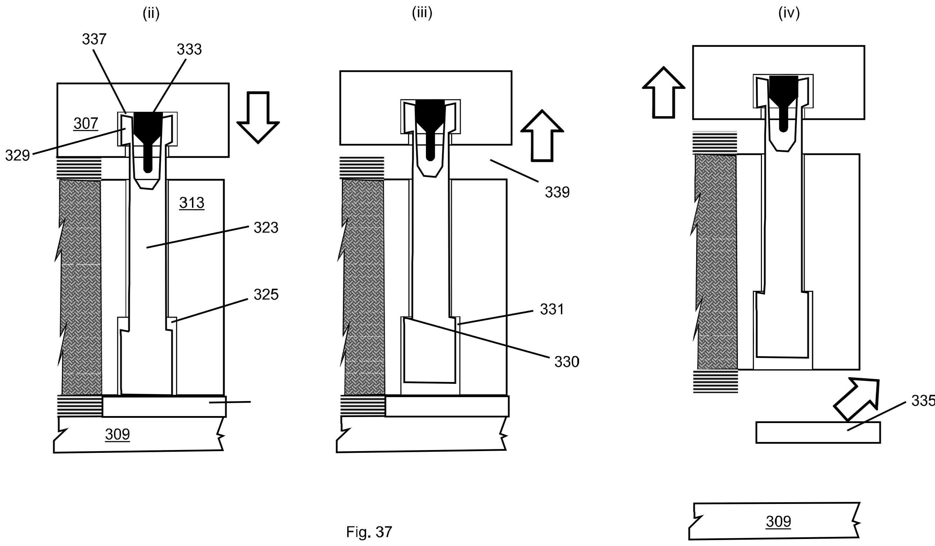

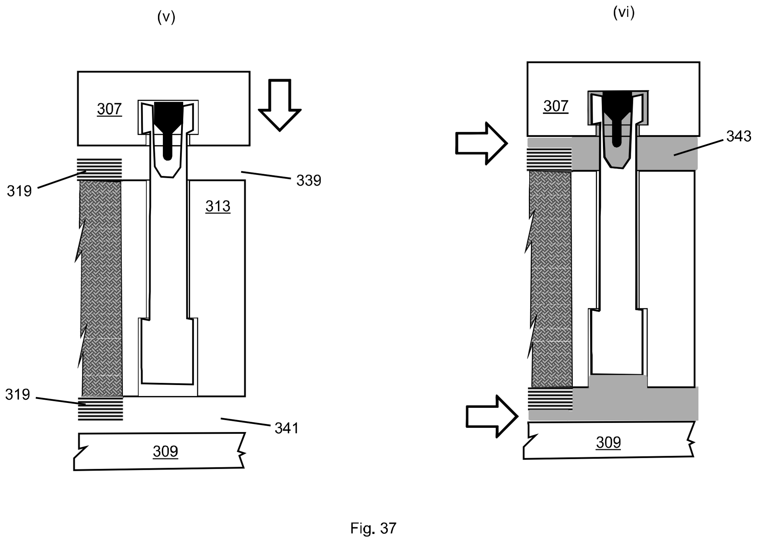

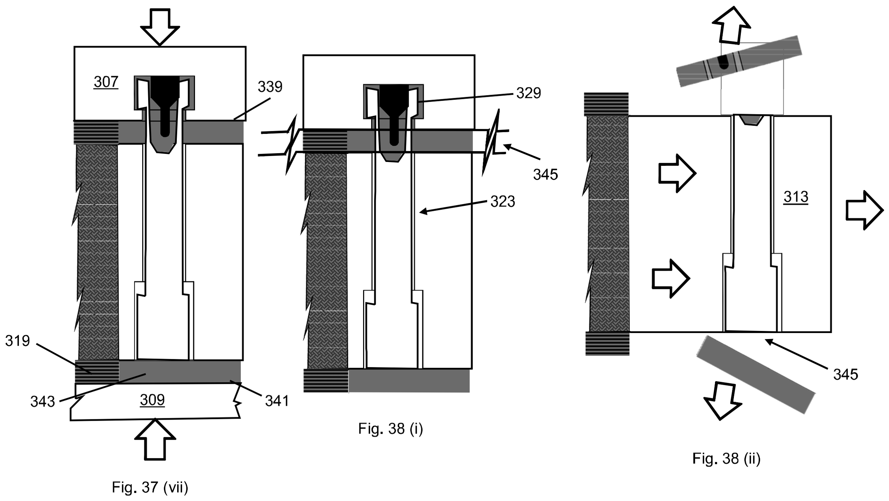

Referring to Figure 37, as the first tool 307 is raised away from the second tool 309, each gripper plug 323 engages a corresponding mandrel 313 and raises the mandrel 313 to create a space between the mandrel 313 and the second tool 309. A spacer 335 is placed in the space. As the first tool 307 is lowered towards the second tool 309, the expandable end portion 329 of each gripper plug 323 is received in a corresponding recess 337 in the first tool 307 and engages with a thicker portion of the corresponding fastener 333, Figure 37 (ii). The first tool 307 is then raised away from the second tool 309, causing the ridge 330 of each gripper plug 323 to engage an edge of a corresponding recess 331 of a corresponding catch 325, Figure 37 (iii). The first tool 307 is then raised further, which allows the spacer 335 to be removed , Figure 37 (iv).

The first tool 307 is lowered towards the second tool 309, creating a first cavity 339 between product preform 319 and the first tool 307 and a second cavity 341 between product preform 319 and the second tool 309, Figure 37 (v).

The apparatus 305 comprises at least one vacuum pump (not shown) which establishes a partial vacuum between the first and second tools 307, 309. The apparatus 305 comprises a resin injection system (not shown) which injects a predefined volume of pressurised preheated resin 343 simultaneously into the first and second cavities 339, 341, Figure 37 (vi). The first tool 307 is again lowered towards the second tool 309, Figure 37 (vii), and the injection pressure of the resin 343 and the partial vacuum is used to move the resin 343 throughout the first and second cavities 339, 341 and to infuse the resin 343 into the product preform 319 to form the composite product on curing of the resin.

Post resin injection and curing, the product is removed from the apparatus 305. This is facilitated by shear planes 345 of the gripper plugs 323, Figure 38 (i) and (ii). These allow the expandable end portions 329 of each gripper plug 323 to be removed allowing the gripper plugs 323 to be removed from the corresponding mandrels 313.

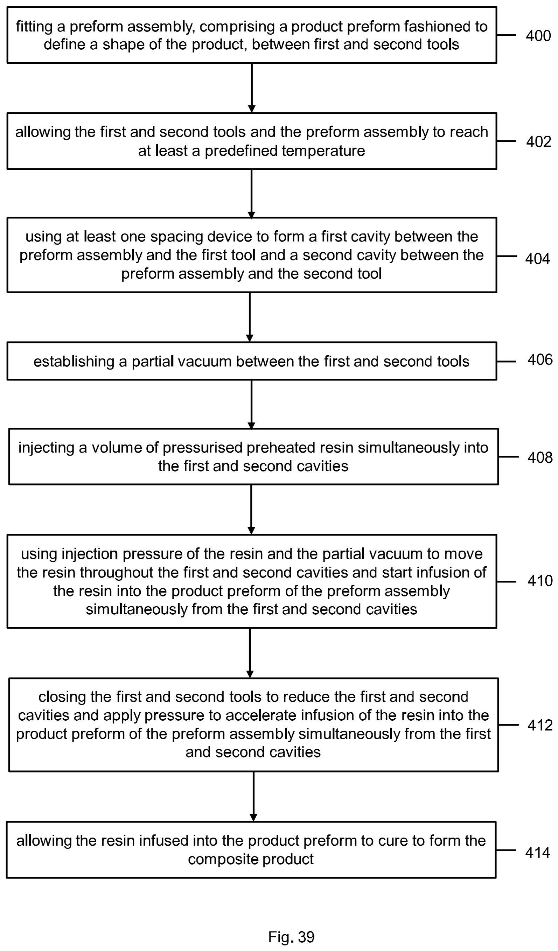

Referring to Figure 39, a resin transfer injection method is described for manufacturing a composite product. Step 400 comprises fitting a preform assembly, comprising a product preform fashioned to define a shape of the product, between first and second tools. Step 402 comprises allowing the first and second tools and the preform assembly to reach at least a predefined temperature. Step 404 comprises using at least one spacing device to form a first cavity between the preform assembly and the first tool and a second cavity between the preform assembly and the second tool. Step 406 comprises establishing a partial vacuum between the first and second tools. Step 408 comprises injecting a volume of pressurised preheated resin simultaneously into the first and second cavities. Step 410 comprises using injection pressure of the resin and the partial vacuum to move the resin throughout the first and second cavities and start infusion of the resin into the product preform of the preform assembly simultaneously from the first and second cavities. Step 412 comprises closing the first and second tools to reduce the first and second cavities and apply pressure to accelerate infusion of the resin into the product preform of the preform assembly simultaneously from the first and second cavities. Step 414 comprises allowing the resin infused into the product preform to cure to form the composite product.

Using the method and apparatus to inject the volume of pressurised preheated resin simultaneously into the first and second cavities reduces resin injection time. This makes the proposed method and apparatus particularly good for manufacturing large composite products, such as full wing skins and complex integrated components.

Using the partial vacuum to move the resin throughout the first and second cavities simultaneously achieves a rapid wet-out of the product preform. This again makes the proposed method well suited for manufacturing large deep product preforms, such as aerospace multi spar torque boxes and control surfaces. The rapid wet-out cycle opens resin choice options to a wide range of resins, and also enables the use of lower pressure resin injection systems and lower tonnage presses, which reduce costs.

Maintaining the predefined temperature of the first and second tools allows the proposed method to be an isothermal processing approach. Tool heat-up and cool-down cycle inefficiencies are avoided and markedly higher build rates can be achieved with reduced energy consumption. When the first and second tools are maintained at a cure temperature of the resin, this enables the use of high Cte tool materials, with little or no shrinkage around the product preform and also eliminates any issue sizing mandrels to accommodate Cte differences.

## Claims

1. A resin transfer injection method for manufacturing a composite product comprising:
fitting a preform assembly, comprising a product preform fashioned to define a shape of the product, between first and second tools;
allowing the first and second tools and the preform assembly to reach at least a predefined temperature;
using at least one spacing device to form a first cavity between the preform assembly and the first tool and a second cavity between the preform assembly and the second tool, the at least one spacing device comprising at least one gripper between the first tool and the preform assembly;
establishing a partial vacuum between the first and second tools;
injecting a volume of pressurised preheated resin simultaneously into the first and second cavities;
using injection pressure of the resin and the partial vacuum to move the resin throughout the first and second cavities and start infusion of the resin into the product preform of the preform assembly simultaneously from the first and second cavities;
closing the first and second tools to reduce the first and second cavities and apply pressure to accelerate infusion of the resin into the product preform of the preform assembly simultaneously from the first and second cavities;
allowing the resin infused into the product preform to cure to form the composite product.

2. A method according to claim 1 in which allowing the preform assembly to reach at least a predefined temperature comprises any of:
fitting a preform assembly preheated to the predefined temperature into a heated cavity between the first and second tools,
fitting a room temperature preform assembly into a heated cavity between the first and second tools and allowing the preform assembly to be heated to at least the predefined temperature.

3. A method according to any preceding claim in which the predefined temperature is any of an injection temperature of resin, a resin cure temperature.

4. A method according to any preceding claim in which the first cavity and the second cavity are sized to accommodate the volume of resin and achieve a predefined volume fibre (Vf) of the product.

5. A resin transfer injection apparatus for manufacturing a composite product comprising:
first and second tools, fashioned to at least partially correspond with first and second outer edges of the product;
a preform assembly, comprising a product preform fashioned to define a shape of the product, fitted between the first and second tools;
at least one heater which allows the first and second tools and the preform assembly to reach at least a predefined temperature;
at least one spacing device to form a first cavity between the preform assembly and the first tool and a second cavity between the preform assembly and the second tool, the at least one spacing device comprising at least one gripper between the first tool and the preform assembly;
a tool movement mechanism for closing and opening the first and second tools;
at least one vacuum pump which establishes a partial vacuum between the first and second tools; and
a resin injection system which injects a volume of pressurised preheated resin simultaneously into the first and second cavities,
wherein injection pressure of the resin and the partial vacuum moves the resin throughout the first and second cavities and starts infusion of the resin into the product preform of the preform assembly simultaneously from the first and second cavities, the first and second tools are closed to reduce the first and second cavities and apply pressure to accelerate infusion of the resin into the product preform of the preform assembly simultaneously from the first and second cavities and the resin is allowed to cure to form the product.

6. An apparatus according to claim 5 in which the first and second tools comprise outer mould line tools, fashioned to at least partially correspond with first and second outer edges of the product.

7. An apparatus according to claim 5 or claim 6 in which the preform assembly comprises one or more inner mandrels and one or more outer mandrels.

8. An apparatus according to any of claims 5 to 7 in which the preform assembly comprises a first key block at a first periphery of the assembly and a second key block at a second, opposite, periphery of the assembly.

9. An apparatus according to any of claims 5 to 8 in which the at least one spacing device comprises at least one first resilient element between a first outer edge of the preform assembly and the first tool to form the first cavity therebetween and at least one second resilient element between a second outer edge of the preform assembly and the second tool to form the second cavity therebetween.

10. An apparatus according to claim 9 in which the at least one first resilient element and the at least one second resilient element comprise any of a ring-shaped resilient element, a prism-shaped resilient element, a folded leaf spring, a top hat-shaped spring, a sine wave-shaped spring, a hook-shaped spring, an open cell foam, a moving cam.

11. An apparatus according to any of claims 5 to 10 further comprising one or more vacuum seals positioned between the first tool and the second tool comprising any of a compliant O ring, a sliding O ring, an inflatable seal.

12. An apparatus according to claim 11 in which the vacuum seals are used in conjunction with a resin stop.

13. An apparatus according to any of claims 5 to 12 further comprising one or more fasteners which provide fastening for the product preform, comprising any of self-adhesive heat resistant tape, one or more grip strips, one or more shear pins, one or more lock-in tabs, one or more clamp plates, one or more bands, one or more perforated caul plates.

14. An apparatus according to any of claims 5 to 13 further comprising one or more spacers which provide support for the product preform.

15. An apparatus according to claim 14 in which the one or more spacers comprise any of one or more inflatable pressure tubes, one or more collapsible grooved triangular prisms, one or more collapsible meshes.
